# EUROPÄISCHE PATENTANMELDUNG

(11) **EP 4 201 664 A1**
(43) Veröffentlichungstag der Anmeldung: **28.06.2023**
(21) Anmeldenummer: 22214036.0
(22) Anmeldetag: 16.12.2022
(51) Int. Cl.: B32B 3/26, B32B 3/28, B32B 7/023, B32B 17/00, B32B 17/10, B32B 27/08, B32B 27/18, B32B 27/30, B32B 27/36, B32B 27/40

(54) **LICHT- UND DISPLAYABDECKUNG MIT DREIDIMENSIONALEM DEKOR**

(30) Priorität: 23.12.2021 EP 21217625
(71) Anmelder: Covestro Deutschland AG, 51373 Leverkusen (DE)
(72) Erfinder: Kuenzel, Jonas, Leverkusen (DE); Thust, Torsten, Wermelskirchen (DE); Kuenzel, Roland, Leverkusen (DE); Schmeer, Holger, Köln (DE); Hagen, Rainer, Leverkusen (DE)
(74) Vertreter: Levpat

(57) **Zusammenfassung**

Die Erfindung betrifft einen Schichtaufbau beinhaltend eine erste Schicht a. mit einer ersten planen Oberfläche A und einer der ersten Oberfläche A gegenüberliegenden, zumindest über einen Teilbereich gegenüber der ersten Oberfläche A angewinkelten Oberfläche A', wobei die Schicht a. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon beinhaltet; eine weitere Schicht b. mit einer ersten planen Oberfläche B und einer der ersten Oberfläche B gegenüberliegenden, zumindest über einen Teilbereich gegenüber der ersten Oberfläche B angewinkelten Oberfläche B', wobei die Schicht b. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon beinhaltet; wobei die Schichten a. und b. so zu einander angeordnet sind, dass die planen Oberflächen A und B parallel zueinander verlaufen und die angewinkelten Oberflächen A' und B' einander zugewandt sind und einen einander entsprechenden Verlauf der Winkelung unter Ausbildung einer 3-D Struktur aufweisen, und wobei eine Zwischenschicht c. zwischen der angewinkelten Oberfläche A' der ersten Schicht a. und der angewinkelten Oberfläche B' der weiteren Schicht b. so angeordnet ist, dass sie in ihrer Längsausdehnung dem angewinkelten Verlauf folgt und die 3-D Struktur abbildet, und wobei sich die Brechungsindices der Schichten b. und c. oder und der Schichten a. und c. jeweils um ≤ 0,1, bevorzugt um ≤ 0,05, mehr bevorzugt um ≤ 0,04, weiter bevorzugt um ≤ 0,03 unterscheiden, sowie dessen Herstellverfahren und eine Beleuchtungsanlage beinhaltend einen erfindungsgemäßen Schichtaufbau.

## Beschreibung

Die Erfindung betrifft einen Schichtaufbau, beinhaltend mindestens eine erste Schicht a. mit einer ersten planen Oberfläche A und einer zur Oberfläche A angewinkelt angeordneten Oberfläche A' und eine weitere Schicht b. mit einer planen Oberfläche B und einer zur Oberfläche B angewinkelten Oberfläche B', wobei die Schichten a. und b. so zu einander angeordnet sind, dass die planen Oberflächen A und B parallel zueinander verlaufen und die angewinkelten Oberflächen A' und B' einander zugewandt sind und einen einander entsprechenden Verlauf der Winkelung unter Ausbildung einer 3D- Struktur aufweisen, und wobei eine Zwischenschicht c. zwischen der gekrümmten Oberfläche A' der ersten Schicht a. und der gekrümmten Oberfläche B' der weiteren Schicht b. so angeordnet ist, dass sie in ihrer Längsausdehnung dem angewinkelten Verlauf folgt und die 3D-Struktur bildet, und wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden.

Der erfindungsgemäße Schichtaufbau, der bevorzugt als dekorativer Mehrschichtkörper dient und im Folgenden auch als 3D-Dekor bezeichnet wird, wird bevorzugt mit einer Lichtquelle, auch Dekorlicht genannt, und einem Anzeigeelement zur Darstellung von Informationen kombiniert.

Der erfindungsgemäße Schichtaufbau umfasst einen Dekorlicht-Effekt mit zwei visuell unterschiedlichen Zuständen: In einem ersten Zustand wird die 3D-Struktur mittels einer Lichtquelle kontrastreich optisch sichtbar gemacht, während die 3D-Struktur in einem zweiten Zustand bei ambienter Lichtumgebung für das Auge unsichtbar bleibt und als gleichförmige Black Panel, Gray Panel oder White Panel Fläche erscheint.

Die Erfindung betrifft außerdem die Verwendung des erfindungsgemäßen Schichtaufbaus als Abdeckung für eine Mensch-Maschine-Kommunikationseinheit (englisch: Human Maschine Interface oder HMI).

Im Automobilbereich wird eine zunehmende Zahl an funktionellen Dekorblenden und Anzeigeelementen (Displays) verbaut, die den Insassen neben einer bestimmten Designsprache auch Informationen mitteilen sollen. Diese Anzeigeelemente teilen den Insassen Informationen durch die Lichtfarbe, den Ort der Beleuchtung oder durch ein zeitliches Beleuchtungsmuster (z.B. Blinken) mit. Wird ein Display hinter diesem Anzeige-Element verwendet, können Informationen auch in Form von Bildern und Text dargestellt werden. All diese Anzeige-Elemente werden meist durch eine transparente Kunststoffabdeckung geschützt, welche auch meist selbst ein bestimmtes geometrisches Design mit sich bringt. Diese Erfindung betrifft vor allem solche Kunststoffabdeckungen.

Abdeckungen für hinterleuchtete Anzeigeelemente mit transparentem Polycarbonat-Träger sind aus US 2002/0089468 bekannt. Ebenso sind aus dieser Schrift farbige 2D-Dekore bekannt, die Teil einer Abdeckung für ein Anzeigeelement sind. Die Abdeckung kann opake sowie transparent eingefärbte Schichten oder Folien beinhalten, die sowohl Licht von der Beobachterseite als auch Licht von der Hinterleuchtungseinheit (BLU) absorbieren, zerstreuen und filtern können.

Abdeckungen für Displays und Methoden zu deren Herstellung sind aus den Stand der Technik, z.B. aus US 2009/268296, bekannt.

Kombinierte Leucht- und Anzeigeelemente mit gemeinsamer Abdeckscheibe sind aus DE 10211270 bekannt. Die vorbeschriebenen Hauptkomponenten einer Multifunktionsanzeige sind wie folgt (E1) Anzeigeelement, z.B. hinterleuchteter LC-Flachbildschirm; (E2) Geschlossene Black Panel Abdeckung für diese beiden Elemente; (E3) Lichtleiterplatte mit LED-Kantenbeleuchtung und - Hinterleuchtung für Leuchtelement; (E4) Flachbildschirm, z.B. auf Basis LCD oder OLED-Technologie, angeordnet neben dem Leuchtelement.

Das Leuchtelement kann ein zweites Anzeigeelement sein, das Symbole und 2D-gedruckte Dekore mittels Hinterleuchtung sichtbar machen kann. Die sog. Black Panel Abdeckung ist dadurch charakterisiert, dass sie solange schwarz erscheint und die rückseitigen Elemente in ambienter Umgebung optisch versteckt, bis eines der Elemente aktiviert wird, d.h. Licht aussendet. Vom Leuchtelement ausgesandtes Licht kann auch in den Bereich des Anzeigeelements reichen, so dass auch diese Fläche als Flächenlicht genutzt wird.

Dreidimensional (3D), d.h. topografisch tief ausgeführte Kunststoff-Dekore sind bekannt. 3D-Dekore auf Basis von thermoplastischer Folie sind ebenso bekannt. So beschreibt WO 2020/212240 A1 eine thermoplastische Folienschicht, die eine optische Information (Dekor) trägt, die mit einem Polycarbonat- oder Polycarbonat-Blend-Träger hinterspritzt ist.

Der Stand der Technik weist keine Display-Abdeckungen auf, die im Anzeigefeld des Displays 3D-Strukturen oder 3D-Dekore tragen. 3D-Kunststoff-Dekore können nach dem Stand der Technik nicht als Display-Abdeckung verwendet werden, weil sie über die 3D-Oberfläche den Bildinhalt linsenartig optisch brechen und damit verzerren oder durch interne Totalreflexion ausblenden würden. In anderen Worten: Es können Elemente aus dem Stand der Technik nicht so miteinander kombiniert werden, ohne dass es im Bereich der Display-Anzeige zumindest partiell über die Anzeigefläche oder für bestimmte Blickrichtungen zu Bildverzerrungen oder -verzeichnungen oder Abschattungen kommt, oder dass das Sichtfeld eingeschränkt wird.

Eine erste Aufgabe war es daher, mindestens einen Nachteil aus dem SdT wenigstens zu einem Teil zu minimieren. Weiterhin war es eine Aufgabe der Erfindung eine Abdeckung, bspw. in Form eines Schichtaufbaus, für Displays, Sensoren und anderen möglichen Funktionselementen mit integrierter 3D-Struktur bereitzustellen, der sowohl die Darstellung der 3D-Struktur als auch die Anzeige eines hinter der Abdeckung, also dem Schichtaufbau, liegenden Displays ermöglicht. Des Weiteren war es eine Aufgabe eine Beleuchtungsanlage bereitzustellen, die es ermöglicht Anzeigeelemente (Displays), Funktionsleuchten und 3D-Dekorleuchten in geschlossene, dekorative thermoplastische Formteile zu integrieren. Insbesondere sollte eine Beleuchtungsanlage bereitgestellt werden, bspw. in Form eines kombinierten Leucht- und Anzeigemodul mit 3D-Struktur, das keine Verzerrungen des Bildes erzeugt, egal ob es frontal oder von der Seite beleuchtet wird. Weiterhin war es eine Aufgabe der Erfindung, ein kombiniertes Leucht- und Anzeigemodul mit 3D-Struktur bereitzustellen, das möglichst kompakt gebaut ist. Eine weitere Aufgabe war es ein kombiniertes Leucht- und Anzeigemodul mit 3D-Struktur bereitzustellen, das eine gemeinsame Abdeckscheibe für dahinter gruppierte Elemente aufweist und seine Dekorlicht- und Display-Funktionen lateral überlappen, so dass sie teilweise oder ganz die gleichen Flächen in der Abdeckscheibe nutzen, ohne dass es zu den oben beschriebenen funktionellen Einschränkungen kommt. Des Weiteren war es eine Aufgabe der Erfindung ein Verfahren zur Herstellung einer zuvor beschriebenen Abdeckscheibe, in Form eines Schichtaufbaus, bereit zu stellen.

Überraschenderweise wurde ein mehrlagiger Schichtaufbau mit innenliegender 3D-Struktur gefunden, der als Abdeckung im Sinne der technischen Aufgabe verwendet werden kann.

Der erfindungsgemäße Schichtaufbau beinhaltet:
a1. eine erste Schicht a. mit einer ersten planen Oberfläche A und einer der ersten Oberfläche A gegenüberliegenden, zumindest über einen Teilbereich gegenüber der ersten Oberfläche A angewinkelten Oberfläche A', wobei die Schicht a. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon ;
a2. eine weitere Schicht b. mit einer ersten planen Oberfläche B und einer der ersten Oberfläche B gegenüberliegenden, zumindest über einen Teilbereich gegenüber der ersten Oberfläche B angewinkelten Oberfläche B', wobei die Schicht b. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon;

wobei die Schichten a. und b. so zu einander angeordnet sind, dass die planen Oberflächen A und B parallel zueinander verlaufen und die angewinkelten Oberflächen A' und B' einander zugewandt sind und einen einander entsprechenden Verlauf der Winkelung unter Ausbildung einer 3D-Struktur aufweisen, und
wobei eine Zwischenschicht c. zwischen der angewinkelten Oberfläche A' der ersten Schicht a. und der angewinkelten Oberfläche B' der weiteren Schicht b. so angeordnet ist, dass sie in ihrer Längsausdehnung dem angewinkelten Verlauf folgt und die 3D-Struktur abbildet, und
wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden.

Bevorzugt fungiert die Schicht b. oder Schicht c. als Licht absorbierende sog. Black Panel Schicht, wobei die Schicht b. eine Lichttransmission von 10 bis 50%, bevorzugt von 15 bis 35%, mehr bevorzugt von 20 bis 25% aufweist, oder wobei Schicht c. eine Lichttransmission von 70 bis 92%, bevorzugt von 73 bis 85% und einen Halbwertswinkel für das gestreute Licht von 15 bis 50°, bevorzugt von 25 bis 50° aufweist und somit als Licht streuende sogenannte White Panel oder Grey Panel Schicht dient. Die Lichttransmission wird bestimmt nach DIN EN ISO 13468-2:2006-7.

Weiterhin bevorzugt weist die Schicht b. oder Schicht c., besonders bevorzugt Schicht b. und Schicht c., eine Lichttransmission von 0 bis 95%, bevorzugt von 1 bis 92%, mehr bevorzugt von 10 bis 93% auf, bestimmt nach DIN EN ISO 13468-2:2006-7.

Die erste Schicht a. und die weitere Schicht b. bilden bevorzugt jeweils eine Außenseite des Schichtaufbaus. Zusätzlich ist es bevorzugt, dass sich auf jeder dieser Außenseiten noch mindestens eine weitere Schicht oder mindestens eine Beschichtung befindet, wie später noch näher beschrieben.

Die erste Schicht a. wird mit oder ohne weitere Beschichtung im Folgenden auch Vorderseite oder Sichtseite des Schichtaufbaus genannt. Die Vorderseite ist die Seite des Schichtaufbaus, die von einem Betrachter des in eine Beleuchtungsanlage eingebauten Schichtaufbaus gesehen wird. Das ist folglich die Seite, von der aus ein Betrachter das 3D-Dekor sehen soll und kann, wenn es entsprechend beleuchtet wird. Die Innenseite bzw. Rückseite des Schichtaufbaus ist die Seite, die zu möglichen Anzeige-Elementen bzw. einer rückseitigen Beleuchtung gerichtet ist und die von der weiteren Schicht b. mit oder ohne weitere Beschichtung gebildet wird.

Unter parallel wird im Rahmen der vorliegenden Erfindung eine Abweichung der Oberflächen A zu B vyon weniger als 5°, bevorzugt von weniger als 3° verstanden.

Unter angewinkelt angeordneten Oberflächen A' bzw. B' wird im Rahmen der vorliegenden Erfindung verstanden, dass die Oberflächen A' bzw. B' gegen über den parallel zueinander verlaufenden Oberflächen A bzw. B der Schichten a. bzw. b. mindestens an einer Stelle nicht koplanar zueinander verlaufen, sodass ihre Flächenelemente einen Winkel von bis zu 85° einschließen können. Bevorzugt liegt die Anwinkelung der Oberfläche A' zu der Oberfläche A und die Anwinkelung der Oberfläche B' zu der Oberfläche B in einem Bereich von 2 bis 85°, weiter bevorzugt in einem Bereich von 3 bis 45°, besonders bevorzugt in einem Bereich von 3 bis 30°.

Der Teilbereich in dem die Oberfläche A' gegenüber der Oberfläche A angewinkelt ist, beträgt bevorzugt 10 bis 99 %, weiter bevorzugt 15 bis 95 %, besonders bevorzugt 20 bis 95 %, bezogen auf die Gesamtfläche der Oberfläche A'.

Der Teilbereich in dem die Oberfläche B' gegenüber der Oberfläche B angewinkelt ist, beträgt bevorzugt 10 bis 99 %, weiter bevorzugt 15 bis 95 %, besonders bevorzugt 20 bis 95 %, bezogen auf die Gesamtfläche der Oberfläche B'.

Bevorzugt verlaufen die Flächenelemente der Oberflächen A' und B' nahezu parallel zu einander, sodass sich eine regelmäßige 3D-Struktur ausbildet.

Unter nahezu parallel wird eine Abweichung der Oberflächen A' zu B' von weniger als 5°, bevorzugt von weniger als 3° und besonders bevorzugt von weniger als 1° verstanden.

Bei der 3D-Struktur kann es sich um jegliche Form handeln, die der Fachmann hierfür auswählen würde. Bevorzugt handelt es sich um 3D-Strukturen ausgewählt aus der Gruppe bestehend aus zickzackförmig, wellenförmig, insbesondere sinusförmig oder Kombinationen aus mindestens zwei hiervon.

Handelt es sich um eine wellenförmige 3D-Struktur so bildet die Tangente an jeder Stelle der Oberfläche A' bzw. B' gegenüber der Oberfläche A bzw. B den Bezugspunkt für die angegebenen Winkel der Anwinkelung.

Bevorzugt weist die Schicht a. eine Dicke in einem Bereich von 100 µm bis 7 mm, bevorzugt in einem Bereich von 150 µm bis 5 mm, besonders bevorzugt in einem Bereich von 200 µm bis 2 mm auf. Bevorzugt weist die Schicht a. eine Dickenabweichung über ihre gesamte Flächenausdehnung von weniger als 20 %, bevorzugt weniger als 10 %, besonders bevorzugt von weniger als 5 % auf.

Bevorzugt weist die Schicht b. eine Dicke in einem Bereich von 100 µm bis 7 mm, bevorzugt in einem Bereich von 150 µm bis 5 mm, besonders bevorzugt in einem Bereich von 200 µm bis 2 mm auf. Bevorzugt weist die Schicht b. eine Dickenabweichung über ihre gesamte Flächenausdehnung von weniger als 20 %, bevorzugt weniger als 10 %, besonders bevorzugt von weniger als 5 % auf.

Bevorzugt weist die Schicht c. eine Dicke in einem Bereich von 10 bis 1000 µm, bevorzugt in einem Bereich von 50 bis 750 µm, besonders bevorzugt von 125 bis 600 µm, ganz besonders bevorzugt von 250 bis 500 µm, am meisten bevorzugt von 300 bis 400 µm auf. Bevorzugt weist die Schicht c. eine Dickenabweichung über ihre gesamte Flächenausdehnung von weniger als 20 %, bevorzugt weniger als 10 %, besonders bevorzugt von weniger als 5 % auf.

Bevorzugt weist der Schichtaufbau eine Dicke in einem Bereich von 350 µm bis 10 mm, besonders bevorzugt in einem Bereich von 2 bis 6 mm auf. Bevorzugt weist der Schichtaufbau eine Dickenabweichung über seine gesamte Flächenausdehnung von weniger als 20 %, bevorzugt weniger als 10 %, besonders bevorzugt von weniger als 5 % auf.

Aufgrund der Abwinkelung der Oberflächen A' und B' weist die aus der Schicht c. gebildete 3D-Struktur bevorzugt eine Tiefenausdehnung innerhalb des Schichtaufbaus, die sich senkrecht zu den parallel ausgebildeten Oberflächen A und B der Schichten a. und b. erstreckt, in einem Bereich von 100 bis 1000 µm, mehr bevorzugt in einem Bereich von 150 bis 800 µm, besonders bevorzugt in einem Bereich von 200 bis 500 µm.

Die Schichten a., b. oder c. weisen jeweils unabhängig voneinander bevorzugt eine Flächenausdehnung in einem Bereich von 1 cm² bis 10 m², mehr bevorzugt in einem Bereich von 10 cm² bis 5 m², besonders bevorzugt in einem Bereich von 100 cm² bis 1 m² auf.

In einer bevorzugten Ausführungsform des Schichtaufbaus weist dieser bevorzugt eine, weiter bevorzugt zwei, besonders bevorzugt drei, ganz besonders bevorzugt vier der folgenden Merkmale auf, wobei die Merkmale (E4) und (E5) alternativ gewählt werden also nicht gemeinsam verwirklicht sind, jeweils aber mit allen anderen Merkmalen frei kombinierbar sind:
(E1) Die Oberfläche A der Vorderseite, also der Außenfläche der Schicht a. und die Oberfläche B der Rückseite, also der Außenseite von Schicht b. sind glatt. Unter glatt wird verstanden, dass die Oberflächen A und B keine Stufen größer als 0,1 mm und keine Krümmungsradien kleiner als 10 mm aufweisen; weiterhin bevorzugt ist, dass die Oberflächen A und B eine Rautiefe Rz nach DIN EN ISO 4287 (10/98) von maximal 50 µm, bevorzugt von maximal 10 µm aufweisen.
(E2) die Schicht a. ist transparent. Unter transparent wird verstanden, dass die Schicht a. im sichtbaren Licht-Spektrum teil- oder volltransparent ist, bevorzugt einen totalen Lichttransmissionsgrad von > 70%, bevorzugt von >80%, mehr bevorzugt von > 85% bestimmt nach DIN EN ISO 13468-2:2006-7. Bevorzugt weist die Schicht a. eine spektrale Absorption nur außerhalb der Emissionsspektren von Display und Ambiente-/Dekorlicht auf.
(E3) die Schicht a. ist bevorzugt als ein flächiger Lichtleiter ausgebildet. Unter Lichtleiter im Zusammenhang mit Schicht a. wird verstanden, dass Licht, z.B. weißes oder farbiges LED-Licht, über eine oder mehrere seiner Kanten eingekoppelt werden kann und das Licht mit ausreichend geringer optischer Dämpfung in der Schicht a. propagieren kann.
(E4) mindestens eine der Schichten b. oder c., bevorzugt Schicht b. und Schicht c., weist einen Absorptionsbereich im sichtbaren Spektrum auf. Beispiele sind transparent farbig und transparent Neutraldichte-grau. Unter Absorptionsbereich wird verstanden, dass die Schicht b. bzw. c. eine Lichttransmission von 5 bis 90%, bevorzugt von 8 bis 70%, mehr bevorzugt von 10 bis 50%, besonders bevorzugt von 15 bis 35%, ganz besonders bevorzugt von 20 bis 25% aufweist, bestimmt nach DIN EN ISO 13468-2:2006-7.
(E5) die Schicht c. als Licht streuende Schicht dient, gekennzeichnet durch eine Lichttransmission von 70 bis 92%, bevorzugt von 73 bis 85% und einen Halbwertswinkel für das gestreute Licht von 15 bis 50°, bevorzugt von 25 bis 50°.

Bevorzugt weist der Schichtaufbau eine Eigenschaft oder Eigenschaftskombination ausgewählt aus der Gruppe bestehend aus (E1); (E2); (E3); (E4); (E5); (E1) und (E2); (E1) und (E3); (E1) und (E4); (E1) und (E5); (E2) und (E3); (E2) und (E4); (E2) und (E5); (E3) und (E4); (E3) und (E5); (E1) und (E2) und (E3); (E1) und (E2) und (E4); (E1) und (E2) und (E5); (E1) und (E3) und (E4); (E1) und (E3) und (E5); (E2) und (E3) und (E4); (E2) und (E3) und (E5); (E1) und (E2) und (E3) und (E4), (E1) und (E2) und (E3) und (E5); besonders bevorzugt (E1) und (E2) und (E3) oder (E2) und (E3) und (E4) oder (E1) und (E2) und (E3) und (E4) oder (E1) und (E2) und (E3) und (E5) auf.

Mindestens eine, bevorzugt alle der Schichten b., oder c. weisen eine Lichttransmission von 5 bis 95%, bevorzugt von 7 bis 93%, mehr bevorzugt von 10 bis 92%, bestimmt nach DIN EN ISO 13468-2:2006-7 auf. Insbesondere Schicht c. weist eine Lichttransmission von 5 bis 95%, bevorzugt von 7 bis 93%, mehr bevorzugt von 10 bis 92%, bestimmt nach DIN EN ISO 13468-2:2006-7 auf.

In dem Absorptionsbereich, wie in (E4) genannt, gilt bevorzugt, dass bei einer Lichttransmission von 5 bis 60% bevorzugt ein Halbwertswinkel von 0 bis 30° für das gestreute Licht besteht. Weiter bevorzugt ist bei einer Lichttransmission von 60 bis 85% ein Halbwertswinkel für das gestreute Licht von 15 bis 50°, bevorzugt von 25 bis 50° besteht.

Bevorzugt weist der Schichtaufbau die folgenden Merkmale auf:
(E1) die Oberfläche A der Vorderseite, also der Außenfläche der Schicht a. und die Oberfläche B der Rückseite, also der Außenseite von Schicht b. sind glatt;
(E2) die Schicht a. ist transparent;
(E3) optional, die Schicht a. ist als ein flächiger Lichtleiter ausgebildet;
(E4) mindestens eine der Schichten b. oder c. weist einen Absorptionsbereich im sichtbaren Spektrum auf.

Bevorzugt weist der Schichtaufbaus das folgende Merkmal auf:
(E4) mindestens eine der Schichten b. oder c. weist einen Absorptionsbereich im sichtbaren Spektrum auf.

In einer bevorzugten Ausführungsform des Schichtaufbaus weist dieser das folgende Merkmal auf:
(E5) die Schicht c. ist als Licht streuende Schicht ausgebildet, insbesondere durch eine Lichttransmission von 70 bis 92%, bevorzugt von 73 bis 85% und einen Halbwertswinkel für das gestreute Licht von 15 bis 50°, bevorzugt von 25 bis 50°.

Die Schicht c. ist im Bereich des sichtbaren Lichts brechungsindexangepasst zu den Schichten a. und b.. Hierdurch ist die 3D-Struktur in ambienter Lichtumgebung und im ausgeschalteten Zustand aller künstlichen Lichtquellen, Hinterleuchtungslicht und LED-Kantenlicht, unsichtbar gemacht. Unter brechungsindexangepasst wird verstanden, dass sich die Brechungsindices D der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden. Der Brechungsindex D ist definiert als Wert für das Verhältnis der Lichtgeschwindigkeit im Vakuum zur Lichtgeschwindigkeit im Medium (Schicht) und bezieht sich auf die Natrium-D-Linie bei der Wellenlänge 589 nm, zugleich die Standardwellenlänge bei Refraktometern. Wenn nicht anders angegeben wurde er gemäß ISO 489 (Verfahren A) ermittelt.

Die Schichten a. und b. weisen bevorzugt ein thermoplastisches Material auf oder bestehen daraus. Bevorzugt weist Schicht c. ebenfalls ein thermoplastisches Material auf.

Das thermoplastische Material ist bevorzugt ausgewählt aus der Gruppe bestehend aus aromatischem Polycarbonat (PC), einschließlich Copolycarbonat, Polyestercarbonat, Polystyrol (PS), Styrol-Copolymeren wie z.B. transparentes Polystyrolacrylnitril (PSAN), Polyalkylenen wie Polyethylen (PE) und Polypropylen (PP), aromatischem Polyester wie Polyethylenterephthalat (PET) und Polybutylenterephthalat (PBT), PET-Cyclohexandimethanol-Copolymer (PETG), Polyethylennaphthalat (PEN), Polyphenylenether (PPE), Polyacrylat, Copolyacrylat, insbesondere Poly- oder Copolymethylmethacrylaten wie Polymethylmethacrylat (PMMA), Polyimide (z.B. PMMI), amorphen Polyamiden (PA), Polyethersulfonen, thermoplastischen Polyurethanen, cyclischen Olefinpolymeren oder -copolymeren (COP bzw. COC) oder eine Mischungen mindestens zweier der genannten Komponenten. Bevorzugt ist das thermoplastische Material transparent. Bevorzugt basier das thermoplastische Material auf aromatischem Polycarbonat und/oder Polymethylmethacrylat, besonders bevorzugt auf aromatischem Polycarbonat oder besteht daraus.

Beispiele für bevorzugte thermoplastischen Polymere, insbesondere in Form von thermoplastischen Polymeren werden im Zusammenhang mit dem weiter unten beschriebenen erfindungsgemäßen Verfahren zur Herstellung eines Schichtaufbaus genannt, weshalb an dieser Stelle auf deren Beschreibung verwiesen wird. Alle im Zusammenhang mit dem erfindungsgemäßen Verfahren beschriebenen thermoplastischen Materialien, deren Zusammensetzungen, inklusive Mengenverhältnissen, Herstellung und Eigenschaften sind ebenfalls für die entsprechenden Schichten a., b. und c. des erfindungsgemäßen Schichtaufbaus gültig.

Alternativ weist mindestens eine der Schichten a. oder b. ein Glas, ausgewählt aus der Gruppe bestehend aus einem Quarzglas, einem Borsilikatglas, einem Fluorsilikatglas, einem Fluoridglas, einem Borphosphatglat, einem Bleiglas, einem Alumosilikatglas oder einer Kombination aus mindestens zwei hiervon, auf.

In einer bevorzugten Ausführungsform des Schichtaufbaus ist die weitere Schicht c. blasenfrei mit den Schichten a. und b. verbunden. Blasenfrei gemäß der Erfindung beutet, dass keine Blasen mit bloßem Auge, bevorzugt bei einer 20-fachen Vergrößerung zu erkennen sind.

In einer bevorzugten Ausführungsform des Schichtaufbaus beinhaltet die weitere Schicht c. ein transparentes, thermoplastisches Polymer, bevorzugt ausgewählt aus der Gruppe bestehend aus einem Polycarbonat, einem Copolycarbonat, einem Polymethylmethacrylat (PMMA), einem Polyethylenterephthalat (PET), einem Blend beinhaltend mindestens eines der vorstehenden Polymere oder einer Mischung aus mindestens zwei hiervon.

Die Schicht c, ist bevorzugt eine technische Folie oder eine Beschichtung, während die beiden äußeren Schichten a. und b. bevorzugt aus einem thermoplastischen Kunststoff bestehen, der mittels eines Spritzguss- oder Direktbeschichtungsverfahrens (engl.: Direct Coating, Direct Skinning) hergestellt werden kann. Diese Schicht c. dient dazu, ein Dekor durch ihre Verformung (sog. 3D-Dekor) darzustellen oder aber gleichzeitig ein Dekor oder ein oder mehrere Symbole und Text durch weitere Veredelungsschritte wie das Bedrucken darzustellen (sog. 2D-Dekore).

Die Schicht c. ist bevorzugt eine thermoplastische Folie, bevorzugt bestehend aus Polycarbonat. Alternativ kann die Schicht c. eine der folgenden Materialien beinhalten oder daraus bestehen: PMMA, PET. Beispiele: Makrofol^{®} LM Polycarbonat Black Panel Folie, Makrofol^{®} LM Polycarbonat Diffusorfolie (Hersteller: Covestro AG, Deutschland), Hostaphan^{®} WNL transluzentweiße Polyesterfolie für Laminieranwendungen, Hostaphan^{®} YNK gelbe Polyesterfolie (Hersteller: Mitsubishi Polyester Film GmbH, Deutschland), PLEXIGLAS^{®} Folien in transparent blau, gelb, grün, rot, orange und braun (Hersteller: Röhm GmbH, Deutschland).

Bevorzugt wird die Schicht c. mittels Laserstrukturierung, Tintenstrahldruck, Laserdruck, Digitaldruck, Offset-Druck oder Siebdruck mit optischer Information versehen. Verschiedene Drucktechnologien bieten unterschiedliche Vorteile: Der Siebdruck ist das am häufigsten für Polycarbonat-Folien angewandte Druckverfahren, bei dem direkt auf das Medium gedruckt wird. Der Siebdruck ergibt haltbare, langlebige Druckbilder mit hoher Opazität und Farbdichte. Der Offset-Druck eignet sich wegen der hohen Druckgeschwindigkeit besonders zur wirtschaftlichen Produktion großer Auflagen und für die Erzeugung sehr feiner Linienmuster. Der Digitaldruck ermöglicht schließlich vollkommene Flexibilität bei hoher Geschwindigkeit und Volumen, da keine Druckform oder -platte benötigt wird und die Technologie für den Druck nach Bedarf bis hinab zu Einzelauflagen verwendet werden kann.

Bevorzugt weisen die Schichten a. und b. das gleiche Material auf. Weiterhin bevorzugt weisen alle drei Schichten a., b. und c. das gleiche Material auf. Bevorzugt ist das Material der Schicht a. und b. ein Polycarbonat. Bevorzugt ist das Material der Schicht a., b. und c. ein Polycarbonat. Bevorzugt ist das Material der Schicht a., b und c. ein PMMA. Weiterhin bevorzugt ist das Material der Schicht a., b und c. ein Polyamid.

In einer bevorzugten Ausführungsform des Schichtaufbaus weist die Schicht a. mindestens eine, bevorzugt mindestens zwei, weiter bevorzugt mindestens drei, besonders bevorzugt mindestens vier, mehr bevorzugt mindestens fünf, am meisten bevorzugt alle der folgenden Eigenschaften auf:
a1. eine Dicke in einem Bereich von 100 µm bis 7 mm, bevorzugt von 150 µm bis 5 mm, besonders bevorzugt von 200 µm bis 2 mm;
a2. eine Fläche in einem Bereich von 1 cm² bis 10 m², bevorzugt von 10 cm² bis 5 m², besonders bevorzugt von 100 cm² bis 1 m²;
a3. eine Ausdehnung der gewinkelten Struktur quer zur Flächenausdehnung der Schicht a. in einem Bereich von 10 µm bis 1 cm, bevorzugt in einem Bereich von 20 µm bis 1000 µm, weiter bevorzugt in einem Bereich von 50 bis 500 µm;
a4. eine Rautiefe Rz auf der Oberfläche A nach DIN EN ISO 4287 (10/98) von maximal 50 µm, mehr bevorzugt von maximal 30 µm, besonders bevorzugt von maximal 10 µm;
a5. eine Transparenz von >70%, bevorzugt von >80%, besonders bevorzugt von >85%, bestimmt nach DIN EN ISO 13468-2-2006-7;
a6. frei von Lichtstreuung im sichtbaren Spektralbereich, insbesondere frei von lichtstreuenden Partikeln.

Bevorzugt weist der Schichtaufbau eine Eigenschaft oder Eigenschaftskombination ausgewählt aus der Gruppe bestehend aus a1.; a2.; a3.; a4.; a5.; a6. a1. und a2.; a1. und a3.; a1. und a4.; a1. und a5.; a1. und a6.; a2. und a3.; a2. und a4.; a2. und a5.; a2. und a6.; a3. und a4.; a3. und a5.; a3. und a6.; a4. und a5.; a4. und a6.; a5. und a6.; a1. und a2. und a3.; a1. und a2. und a4.; a1. und a2. und a5.; a1. und a2. und a6.; a1. und a3. und a4.; a1. und a3. und a5.; a1. und a3. und a6.; a1. und a4. und a5.; a1. und a4. und a6.; a1. und a5. und a6.; a2. und a3. und a4.; a2. und a3. und a5.; a2. und a3. und a6.; a2. und a4. und a5.; a2. und a4. und a6.; a2. und a5. und a6.; a3. und a4. und a5.; a3. und a4. und a6.; a3. und a5. und a6.; a4. und a5. und a6.; a1. und a2. und a3. und a4.; a1. und a2. und a3. und a5.; a1. und a2. und a3. und a6.; a1. und a2. und a4. und a5.; a1. und a2. und a4. und a6.; a1. und a2. und a5. und a6.; a1. und a3. und a4. und a5.; a1. und a3. und a4. und a6.; a1. und a3. und a5. und a6.; a1. und a4. und a5. und a6.; a2. und a3. und a4. und a5.; a2. und a3. und a4. und a6.; a2. und a3. und a5. und a6.; a3. und a4. und a5. und a6.; a1. und a2. und a3. und a4. und a5.; a1. und a2. und a3. und a4. und a6.; a1. und a2. und a3. und a5. und a6.; a1. und a2. und a4. und a5. und a6.; a1. und a3. und a4. und a5. und a6.; besonders bevorzugt a1. und a2. und a3. oder a2. und a3. und a4. oder a1. und a2. und a3. und a4. oder a1. und a2. und a3. und a4. und a5. auf.

In einer bevorzugten Ausführungsform des Schichtaufbaus weist die Schicht b. mindestens eine, bevorzugt mindestens zwei, weiter bevorzugt mindestens drei, besonders bevorzugt mindestens vier, ganz besonders bevorzugt fünf der folgenden Eigenschaften auf, wobei die Eigenschaften b5 und b6 alternativ sind und daher nicht gleichzeitig verwirklicht werden:
b1. eine Dicke in einem Bereich von 100 µm bis 7 mm, bevorzugt von 150 µm bis 5 mm, besonders bevorzugt von 200 µm bis 2 mm;
b2. eine Fläche in einem Bereich von 1 cm² bis 10 m², bevorzugt von 10 cm² bis 5 m², besonders bevorzugt von 100 cm² bis 1 m²;
b3. eine Rautiefe Rz auf der Oberfläche B nach DIN EN ISO 4287 (10/98) von maximal 50 µm, mehr bevorzugt von maximal 30 µm, besonders bevorzugt von maximal 10 µm;
b4. eine Transparenz in einem Bereich von 10 bis 100%, bevorzugt von 15 bis 98%, besonders bevorzugt von 40 bis 95 %, ganz besonders bevorzugt von 70 bis 90 %, bestimmt nach DIN EN ISO 13468-2-2006-7;
b5. frei von Lichtstreuung im sichtbaren Spektralbereich;
b6. Streupartikel in einer Menge in einem Bereich von 0,1 bis 20 Gew.-%, bezogen auf das Gesamtgewicht der Schicht b.

Bevorzugt weist die Schicht b. des Schichtaufbau eine Eigenschaft oder Eigenschaftskombination ausgewählt aus der Gruppe bestehend aus b1.; b2.; b3.; b4.; b5.; b6. b1. und b2.; b1. und b3.; b1. und b4.; b1. und b5.; b1. und b6.; b2. und b3.; b2. und b4.; b2. und b5.; b2. und b6.; b3. und b4.; b3. und b5.; b3. und b6.; b4. und b5.; b4. und b6.; b5. und b6.; b1. und b2. und b3.; b1. und b2. und b4.; b1. und b2. und b5.; b1. und b2. und b6.; b1. und b3. und b4.; b1. und b3. und b5.; b1. und b3. und b6.; b1. und b4. und b5.; b1. und b4. und b6.; b1. und b5. und b6.; b2. und b3. und b4.; b2. und b3. und b5.; b2. und b3. und b6.; b2. und b4. und b5.; b2. und b4. und b6.; b2. und b5. und b6.; b3. und b4. und b5.; b3. und b4. und b6.; b3. und b5. und b6.; b4. und b5. und b6.; b1. und b2. und b3. und b4.; b1. und b2. und b3. und b5.; b1. und b2. und b3. und b6.; b1. und b2. und b4. und b5.; b1. und b2. und b4. und b6.; b1. und b2. und b5. und b6.; b1. und b3. und b4. und b5.; b1. und b3. und b4. und b6.; b1. und b3. und b5. und b6.; b1. und b4. und b5. und b6.; b2. und b3. und b4. und b5.; b2. und b3. und b4. und b6.; b2. und b3. und b5. und b6.; b3. und b4. und b5. und b6.; b1. und b2. und b3. und b4. und b5.; b1. und b2. und b3. und b4. und b6.; b1. und b2. und b3. und b5. und b6.; b1. und b2. und b4. und b5. und b6.; b1. und b3. und b4. und b5. und b6.; besonders bevorzugt b1. und b2. und b3. oder b2. und b3. und b4. oder b1. und b2. und b3. und b4. oder b1. und b2. und b3. und b4. und b5. auf.

Der Schichtaufbau gemäß einem der vorhergehenden Ansprüche, wobei die Schicht c. mindestens eine, bevorzugt mindestens zwei, besonders bevorzugt mindestens drei, ganz besonders bevorzugt alle der folgenden Eigenschaften aufweist:
c1. eine Dicke in einem Bereich von 10 µm bis 1000 µm, bevorzugt in einem Bereich von 50 bis 750 µm, besonders bevorzugt von 125 bis 600 µm, ganz besonders bevorzugt von 250 bis 500 µm, am meisten bevorzugt von 300 bis 400 µm auf;
c2. eine Fläche in einem Bereich von 1 cm² bis 50 m², mehr bevorzugt von 10 cm² bis 10 m², mehr bevorzugt von 50 cm² bis 5 m²;
c3. eine Dickenvarianz über die gesamte Fläche in einem Bereich von 0,1 bis 1 µm, bevorzugt von 0,2 bis 0,5 µm;
c4. eine Transparenz in einem Bereich von 10 bis 99%, bevorzugt von 25 bis 99%, besonders bevorzugt von 30 bis 98%.

Bevorzugt weist die Schicht c. des Schichtaufbau eine Eigenschaft oder Eigenschaftskombination ausgewählt aus der Gruppe bestehend aus c1.; c2.; c3.; c4.; c1. und c2.; c1. und c3.; c1. und c4.; c2. und c3.; c2. und c4; c3. und c4.; c1. und c2. und c3.; c1. und c2. und c4.; c1. und c3. und c4.; c2. und c3. und c4.; c1. und c2. und c3. und c4.; besonders bevorzugt c1. und c2. und c3. oder c1. und c2. und c3. und c4 auf.

In einer bevorzugten Ausführungsform des Schichtaufbaus weist der Schichtaufbau mindestens eine, bevorzugt mindestens zwei, mehr bevorzugt mindestens drei, besonders bevorzugt vier, am meisten bevorzugt alle der folgenden Eigenschaften auf:
(A1) Alle Schichten, insbesondere Schichten a., b. und c., sind in Summe nur schwach Licht streuend im sichtbaren Spektralbereich, bevorzugt durch einen Haze-Wert (Opazität, Trübung) nach ASTMD 1003 von kleiner als 20%, bevorzugt kleiner als 15%, weiter bevorzugt kleiner als 10%, um eine gute Lesbarkeit, insbesondere mit hoher Auflösung, gutem Kontrast und guter Farbmetrik einer Punktmatrix-Anzeige zu gewährleisten;
(A2) Die Gesamttransmission Ty des Schichtaufbaus beträgt im sichtbaren Spektrum mindestens 10%, bevorzugt in einem Bereich von 10 bis 90%, besonders bevorzugt in einem Bereich von 15 bis 80%, bestimmt nach DIN ISO 13468-2:2006 (D65, 10°);
(A3) einen Halbwertswinkel des gestreuten Lichts von 0 bis 15°, bevorzugt von 1 bis 10°, besonders bevorzugt von 2 bis 8°;
(A4) schwach Licht streuend im nahen Infrarot, gekennzeichnet durch eine Trübung, bestimmt durch Nah-Infrarot-Spektroskopie in Anlehnung an ASTM D1003, von kleiner als 5%, bevorzugt kleiner als 2%, mehr bevorzugt kleiner als 1%.

Insbesondere weist der Schichtaufbau das Merkmal (A5) und besonders bevorzugt die Merkmalskombination (A1) und (A2) und (A5) oder (A1) und (A2) und (A4) und (A5) auf.

Ein weiterer Aspekt der Erfindung betrifft ein Verfahren zur Herstellung eines Schichtaufbaus mit mindestens den Schritten:
I) Gießen eines verflüssigten Polymeren, bevorzugt ausgewählt aus der Gruppe bestehend aus Polycarbonat, Copolycarbonat, Polyestercarbonat, PMMA, PET, einem Polyurethan, einem thermoplastischen Polyurethan oder einer Mischung aus mindestens zwei hiervon in eine Form mit einer gewinkelten Oberfläche, wobei nach Verfestigung des Polymeres eine Schicht a. aus dem Polymer entsteht, die einer erste planare Oberfläche A und eine gewinkelte Oberfläche A' aufweist;
II) Auflegen einer weiteren Schicht c. auf die gewinkelte Oberfläche A', sodass die weitere Schicht c. den Verlauf der Winkelung in ihrer Längsausdehnung annimmt und eine 3D-Struktur ausbildet; bevorzugt wird die Schicht c. zuvor laminiert, bedruckt und/oder verformt;
III) Gießen eines Polymeren, bevorzugt ausgewählt aus der Gruppe bestehend aus Polycarbonat, Copolycarbonat, Polyestercarbonat, PMMA, PET einem Polyurethan, einem thermoplastischen Polyurethan oder einer Mischung aus mindestens zwei hiervon, auf die weitere Schicht c. aus Schritt II) unter Ausbildung einer Schicht b., wobei die gekrümmte Oberfläche A' sich spiegelbildlich in der Schicht b. als gewinkelte Oberfläche B' widerspiegelt;
wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden, gemäß ISO 489 (Verfahren A) ermittelt. Der durch das erfindungsgemäße Verfahren erhaltene Schichtaufbau entspricht in seinem Aufbau, Eigenschaften und Zusammensetzung dem erfindungsgemäßen Schichtaufbau. Daher sind sämtliche Angaben zum erfindungsgemäßen Schichtaufbau auch für den durch das erfindungsgemäße Verfahren hergestellte Schichtaufbau anwendbar.

Das Gießen in Schritt I) kann auf jede Art erfolgen, die der Fachmann kennt, um Polymere zu gießen. Das Gießen ist bevorzugt ausgewählt aus der Gruppe bestehend aus Spritzguss, variothermer Spritzguss, Spritzprägen und Niederdruckspritzguss. Zu letzterem zählt das Reaction Injection Molding (RIM) Verfahren.

Das Auflegen der weiteren Schicht c. auf die gewinkelte Oberfläche A' in Schritt II) kann durch jede Art von Auflegen erfolgen, die der Fachmann hierfür auswählen würde. Bevorzugt findet das Auflegen durch eine Methode ausgewählt aus der Gruppe bestehend aus einem Druckluftpressen, einem Vakuumziehen oder einen Einlegen der Folie in das Werkzeug statt.

Das Gießen in Schritt III) kann auf jede Art erfolgen, die der Fachmann kennt, um Polymere zu gießen. Das Gießen ist bevorzugt ausgewählt aus der Gruppe bestehend aus Spritzguss mit Folieneinleger, genannt Folienhinterspritzen (FIM Verfahren), aber auch variothermer Spritzguss, Spritzprägen und Niederdruckspritzguss ist möglich. Zu letzterem zählt das Reaction Injection Molding (RIM) Verfahren.

Das Polymer kann jedes Polymer sein, das der Fachmann für den Schichtaufbau auswählen würde. Bevorzugt ist das verflüssigte Polymer ausgewählt aus der Gruppe bestehend aus Polycarbonat, einem Polyurethan, einem thermoplastischen Polyurethan oder einer Mischung aus mindestens zwei hiervon.

Die Polycarbonate sind sowohl Homopolycarbonate als auch Copolycarbonate. Die Polycarbonate können in bekannter Weise linear oder verzweigt sein. Sofern im Rahmen der vorliegenden Erfindung von "Polycarbonaten" gesprochen wird, sind stets aromatische Polycarbonate gemeint, auch, wenn nicht explizit erwähnt.

Die Herstellung der Polycarbonate erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-phenylethan, 1,3-Bis-[2-(4-hydroxyphenyl)-2-propyl]benzol (Bisphenol M), 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC) sowie die Bisphenole der Formeln (I) bis (III) 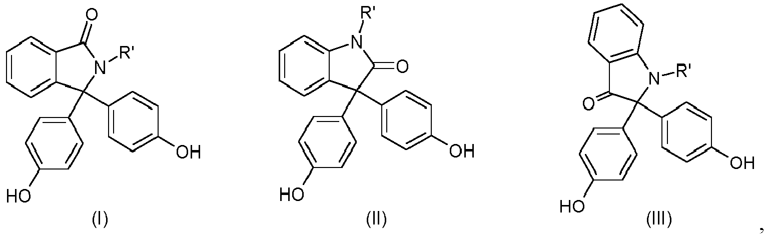 in denen R' jeweils für einen C1- bis C4-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis-(3,5-dibrom-4-hydroxyphenyl)-propan, 2,2-Bis-(3,5-dichlor-4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff." sowie in "D.G. Legrand, J.T. Bendler, Handbook of Polycarbonate Science and Technology, Marcel Dekker New York 2000, S. 72ff." beschrieben.

Im Fall der Homopolycarbonate ist nur eine Dihydroxyarylverbindung eingesetzt, im Fall der Copolycarbonate sind mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Triiodphenol, p-Jodphenol, sowie deren Mischungen.

Bevorzugte Kettenabbrecher sind ferner die Phenole, welche ein- oder mehrfach mit C₁- bis C₃₀-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Dihydroxyarylverbindungen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen. Weitere geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt. Die aromatischen Polycarbonate sind bevorzugt nach dem Grenzflächenverfahren hergestellt.

Bevorzugt werden lineare Polycarbonate eingesetzt.

Die aromatischen Polycarbonate besitzen bevorzugt gewichtsmittlere Molekulargewichte Mw zwischen 10.000 und 50.000 g/mol, weiter bevorzugt zwischen 14.000 und 40.000 g/mol, noch weiter bevorzugt zwischen 15.000 und 35.000 g/mol, besonders bevorzugt zwischen 18.000 - 32.000 g/mol, ganz besonders bevorzugt zwischen 20.000 und 28.000 g/mol. Die Werte gelten für die Ermittlung durch Gelpermeationschromotographie, unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist auch beim Kalibrieren Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Der MVR-Wert des aromatisches Polycarbonats, gemessen nach ISO 1133:2012-03 bei 300 °C und 1,2 kg, beträgt bevorzugt 5 bis 35 cm³/(10 min), weiter bevorzugt 10 bis 20 cm³/(10 min).

Die MW- und MVR-Angaben beziehen sich auf die in der Zusammensetzung des thermoplastischen Polymers enthaltenen aromatischen Polycarbonate in ihrer Gesamtheit.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5 -trimethylcyclohexan.

"Basiert auf" bedeutet, dass vorzugsweise mindestens 60 Gew.-%, weiter bevorzugt mindestens 70 Gew.-%, noch weiter bevorzugt mindestens 80 Gew.-% der Gesamtzusammensetzung des thermoplastischen Materials das entsprechende Polymer sind. Das thermoplastische Material umfasst neben einem oder mehreren der genannten Polymere bevorzugt weitere übliche Additive. Solche sind z.B. Flammschutzmittel, Antistatika, UV-Absorber, Stabilisatoren, Antioxidantien und Entformungsmittel. Geeignete Ultraviolett-Absorber sind Benzotriazole, Triazine, Benzophenone und/oder arylierte Cyanoacrylate. Als Stabilisatoren bevorzugt sind Phosphite und Phosphonite sowie Phosphine. Ferner können Alkylphosphate z. B. Mono-, Di- und Trihexylphosphat, Triisoctylphosphat und Trinonylphosphat eingesetzt werden. Als Antioxidantien können phenolische Antioxidantien wie alkylierte Monophenole, alkylierte Thioalkylphenole, Hydrochinone und alkylierte Hydrochinone eingesetzt werden. Geeignete Entformungsmittel sind zum Beispiel solche auf Basis eines Fettsäureesters, bevorzugt eines Stearinsäureesters, insbesondere bevorzugt auf Pentaerythritbasis. Bevorzugt werden Pentaerythrittetrastearat (PETS) und/oder Glycerinmonostearat (GMS) eingesetzt.

Besonders bevorzugt enthält die Zusammensetzung des thermoplastischen Polymers weniger als 0,1 Gew.-%, ganz besonders bevorzugt ist die Zusammensetzung des thermoplastischen Polymers frei von Streuadditiven, z.B. solchen auf Basis von Acrylat, Polyethylen, Polypropylen, Polystyrol, Glas, Aluminiumoxid und/oder Siliciumdioxid. Ferner enthält die Zusammensetzung des thermoplastischen Polymers besonders bevorzugt weniger als 0,1 Gew.-%, ganz besonders bevorzugt ist sie frei von Weißpigmenten o.ä. Pigmenten wie z.B. Titandioxid, Kaolin, Bariumsulfat, Zinksulfid, Aluminiumoxid, Aluminiumhydroxid, Quarzmehl, von Interferenzpigmenten und/oder Perlglanzpigmenten, d.h. plättchenförmigen Partikeln wie Glimmer, Graphit, Talk, SiO2, Kreide und/oder Titandioxid, beschichtet und/oder unbeschichtet.

Ferner enthält die Zusammensetzung des thermoplastischen Polymers besonders bevorzugt weniger als 0,1 Gew.-%, ganz besonders bevorzugt ist die Zusammensetzung des thermoplastischen Polymers frei von nanopartikulären Systemen wie Metallpartikeln, Metalloxidpartikeln. Bevorzugt enthält die Zusammensetzung des thermoplastischen Polymers auch weniger als 0,1 Gew.-%, besonders bevorzugt ist sie frei von Pigmenten auf Basis von unlöslichen Pigmenten, wie sie z.B. in DE 10057165 A1 und in WO 2007/135032 A2 beschrieben sind.

Das transparente Material kann mit Farbmitteln versetzt sein, um den Farbeindruck zu ändern. Bevorzugt ist das thermoplastische Material transparent eingefärbt, besonders bevorzugt transparent neutral-grau eingefärbt. Dieses hat den Vorteil, dass der Farbraum der hinter der transparenten Schicht liegenden Lichtquelle, welche Informationen transportiert und beispielsweise ein Display sein kann, erhalten bleibt. Solche neutral-grau eingefärbten Zusammensetzungen sind beispielsweise in der EP 2 652 029 A2 beschrieben, welche ein bevorzugtes Material für die transparente thermoplastische Schicht, insbesondere die Schicht a. oder die Schicht b., beschreibt. Entsprechende Polycarbonat-Zusammensetzungen enthalten ein Farbmittel oder eine Farbmittelkombination der Strukturen ausgewählt aus:
I. (1a) und/oder (1b) und (4) und (2a) und/oder (2b),
II. (1a) und/oder (1b) und (5) und (2a) und/oder(2b),
III. (1a) und/oder (1b) und (7),
IV. (1a) und/oder (1b) und (4) und (7),
V. (1a) und/oder (1b) und (5) und (7),
VI. (4) und (2a) und/oder (2b),
VII.(5) und (2a) und/oder (2b),
VIII. (2a) und/oder(2b) und (4) und (6),
IX. (2a) und/oder(2b) und (5) und (6),
X. (3) und (4),
XI. (3) und (5),
XII.(3) und (4) und (6),
XIII. (3) und (5) und (6),
XIV. (3) und (4) und (7),
XV. (3) und (5) und (7),
XVI. (3) und (4) und (2a) und/oder(2b),
XVII. (3) und (5) und (2a) und/oder(2b),
XVIII. (6) und (1a) und/oder (1b),
XIX. (6) und (1a) und/oder (1b) und (7),
XX. (1a) und/oder (1b) und (8),
XXI. (7) und (4),
XXII. (7) und (5),
XXIII. (1a) und/oder (1b),
XXIV. (2a) und/oder (2b),
XXV. (7),
XXVI. (2a) und/oder (2b) und (7),
wobei die Strukturen wie folgt sind: 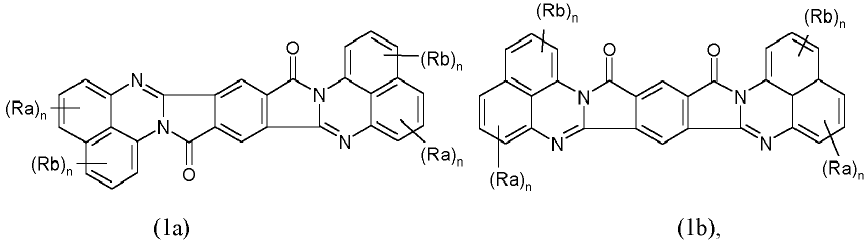 wobei
- Ra und Rb unabhängig voneinander für einen linearen oder verzweigten Alkylrest oder Halogen stehen;
- n unabhängig vom jeweiligen R für eine natürliche Zahl zwischen 0 und 3 steht, wobei der Rest für n = 0 Wasserstoff ist; 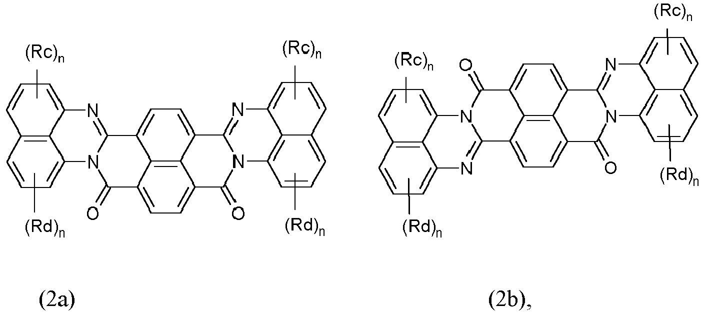 wobei
   - Rc und Rd unabhängig voneinander für einen linearen oder verzweigten Alkylrest oder Halogen stehen;
   - n unabhängig vom jeweiligen R für eine natürliche Zahl zwischen 0 und 3 steht, wobei der Rest für n = 0 Wasserstoff ist; 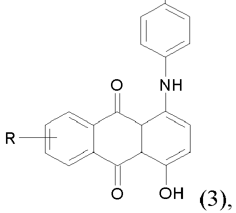 wobei
      R ausgewählt ist aus der Gruppe, die aus H und p-Methylphenlyamin-Rest besteht; 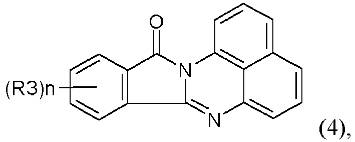 wobei
      R3 Halogen ist;
      n = 4 ist; 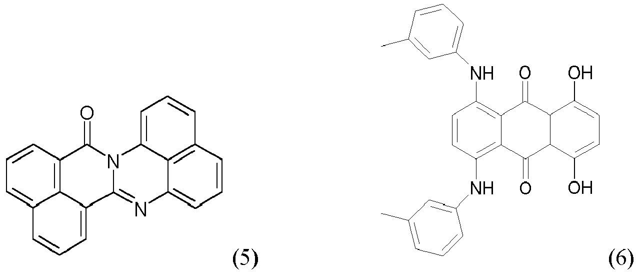 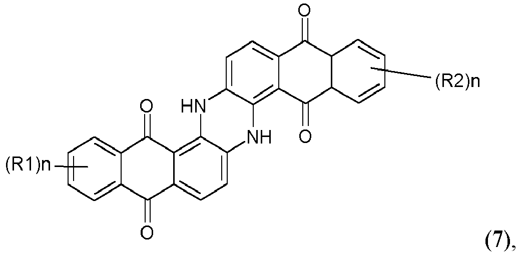 wobei
         - R1 und R2 unabhängig voneinander für einen linearen oder verzweigten Alkylrest oder Halogen stehen;
         - n für eine natürliche Zahl zwischen 0 und 4 steht; 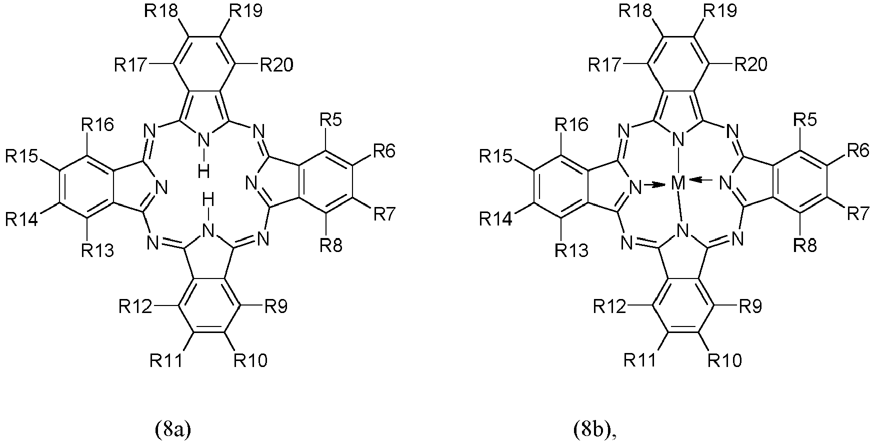 wobei
            - die Reste R(5-20) jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon oder CN sind und
            - M ausgewählt ist aus der Gruppe, die aus Aluminium, Nickel, Cobalt, Eisen, Zink, Kupfer und Mangan besteht,
wobei die Farbmittel der Strukturen (1a), (1b), (2a), (2b), (3) und die Farbmittel der Strukturen (4), (5), (6), (7), (8a/b) in der thermoplastischen Polymer-Zusammensetzung, bezogen auf die jeweilige Einzelkomponente, in Mengen von 0,000001 Gew.-% bis 1,000000 Gew.-%, bezogen auf die Gesamtpolymerzusammensetzung, verwendet werden.

Unter die Bezeichnung "3D-Struktur" fallen Musterungen, Texturen und Narbungen, die eine gezielt in die Oberfläche eingebrachte, räumliche Anordnung und Verteilung einzelner Strukturelemente aufweisen, aus denen für einen Betrachter ein visueller Eindruck eines Optikdesigns entsteht. Dazu sind Strukturelemente enthalten, deren laterale Ausdehnung Dimensionen von bevorzugt mindestens 1 mm, weiter bevorzugt größer als 3 mm, besonders bevorzugt größer als 5 mm aufweisen. Außerdem weisen die Flächennormalen dieser Strukturelemente bevorzugt eine Winkelabweichung von 2 bis 85°, bevorzugt von 3 bis 45°, besonders bevorzugt von 3 bis 30°, bezogen auf die Flächennormalen der angrenzenden Strukturelemente auf. Darüber hinaus liegt die Höhe der 3D Strukturelemente bevorzugt im Bereich von 0,1 mm bis zur halben minimalen Dicke der Schicht a. im Bereich der 3D-Struktur. "Von"/"bis" schließt hierbei die genannte Unter- bzw. Obergrenze ein. Die Höhe der 3D-Struktur bezeichnet hierbei die Differenz zwischen dem höchsten und dem tiefsten Punkt der Struktur, was bezogen auf den Schichtaufbauquerschnitt die Differenz zwischen der minimalen und der maximalen Wanddicke entspricht.

Ein weiterer Aspekt der Erfindung ist eine Beleuchtungsanlage, beinhaltend mindestens:
i. einen erfindungsgemäßen Schichtaufbau oder nach dem erfindungsgemäßen Prozess hergestellten Schichtaufbau,
ii. eine Lichtquelle ii., die so neben der Schicht a. angeordnet ist, dass ein seitliches Einstrahlen von Licht in die Stirnseite der Schicht a. möglich ist;
iii. gegebenenfalls ein Display, wobei das Display auf der Seite der Schicht b. des Schichtaufbaus angeordnet ist, wobei die Fläche des Displays bevorzugt parallel zu der Flächenausdehnung des Schichtaufbaus ausgerichtet ist, so dass der erfindungsgemäße Schichtaufbau durchleuchtet wird;
iv. gegebenenfalls eine Lichtquelle iv., wobei die Lichtquelle iv. auf der Seite der Schicht b. des Schichtaufbaus angeordnet ist;
v. gegebenenfalls einen Sensor, wobei der Sensor auf der Seite der Schicht b. des Schichtaufbaus angeordnet ist, wobei die Fläche des Sensors bevorzugt parallel zu der Flächenausdehnung des Schichtaufbaus ausgerichtet ist;
vi. gegebenenfalls einen Projektionsapparat, der in der Ebene der Oberfläche A' oder der Oberfläche B' oder der Oberfläche B, oder geometrisch zwischen A' und B eine Abbildungsebene hat, in der das vom Projektionsapparat projizierte Bild/Video scharf ist bzw. entsprechend eingestellt werden kann.

Die Lichtquelle ii. wird bevorzugt als Kantenlicht bezeichnet. Sie besteht bevorzugt aus einem länglich ausgedehnten LED-Modul oder LED-Streifen mit in Reihe angeordneten sog. Einzel-LEDs. Eine Einzel-LED kann z.B. eine Weißlicht-LED oder eine RGB-LED-Gruppe sein.

Die Lichtquelle iv. wird bevorzugt als Durchlicht bezeichnet. Sie besteht bevorzugt aus einem LED-Panel mit bevorzugt in einer Matrix angeordneten Einzel-LEDs. Eine Einzel-LED kann eine Weißlicht-LED oder eine RGB-LED-Gruppe sein. Zum Beispiel ist die Lichtquelle iv. ein ISELED LED Modul oder ein Passiv-Matrix-LED-Display. Die Lichtquelle iv. kann alternativ auch ein diffuses Flächenlicht sein, wie z.B. in der US 2004/0066645 A1 beschrieben.

Die Lichtquelle iv. kann alleine oder in Kombination mit einem Display iii. verwendet werden. Kombinationen verschiedener Hinterleuchtungselemente bestehend aus Displays und Lichtquellen sind dabei denkbar.

Unter Stirnseite der Schicht a. wird die Seite der Dickenausdehnung der Schicht a. verstanden, die sich senkrecht zu der Flächenausdehnung der Schicht a. erstreckt, wie z.B. eine seitliche Kante.

Die Bereiche der seitlichen Kante, die für die Lichteinkopplung in Schicht a verwendet werden ermöglichen bevorzugt eine weitgehend senkrechte Durchstrahlung. Bei weitwinklig abstrahlenden Einzel-LEDs ist die Fläche bevorzugt konkav vor der LED, bei Einzel-LEDs mit Kollimationsoptik ist die Fläche bevorzugt eben.

Der Schichtaufbau weist bevorzugt mindestens eine, bevorzugt mindestens zwei, mehr bevorzugt mindestens drei, besonders bevorzugt alle der folgenden weiteren Merkmale für die Bereiche auf, die vor einem Display-Anzeigefeld liegen:
- Alle Schichten, insbesondere Schichten a., b. und c., sind in Summe nur schwach Licht streuend im sichtbaren Spektralbereich, bevorzugt durch einen Haze-Wert (Opazität, Trübung) nach ASTMD 1003 von kleiner als 20%, bevorzugt kleiner als 15%, weiter bevorzugt kleiner als 10%, um eine gute Lesbarkeit, insbesondere mit hoher Auflösung, gutem Kontrast und guter Farbmetrik einer Punktmatrix-Anzeige zu gewährleisten.
- Die Gesamttransmission Ty des Schichtaufbaus beträgt im sichtbaren Spektrum mindestens 10%, bevorzugt mindestens 15%, weiter bevorzugt mindestens 50%, besonders bevorzugt mindestens 80%, bestimmt nach DIN ISO 13468-2:2006 (D65, 10°).

Der Schichtaufbau weist bevorzugt folgendes weitere Merkmal für seine Bereiche auf, die vor dem Leuchtfeld einer Hinterleuchtung oder eines Anzeigeelements, also auf der Rückseite des Schichtaufbaus, die auf der Seite der Schicht b. als Außenfläche liegen:
- Schicht b. und/oder Schicht c. streuen unabhängig voneinander Licht, um eine homogenere Ausleuchtung eines dahinterliegenden Leuchtelements (Direktlicht) zu erreichen. eine hohe Lichtstreuung ist dann bevorzugt, wenn die Bereiche dieser Schichten keine Anzeigefunktion übernehmen müssen.

Mit dem erfindungsgemäßen Schichtaufbau ist es erstmals möglich, bildgebende Anzeige-Elemente wie Punkt-Matrix-Displays hinter 3D-Reliefstrukturen zu platzieren, weil es über den erfindungsgemäßen Schichtaufbau gelingt, Licht dieser Anzeige zu transmittieren, ohne dass Licht an den geometrischen 3D-Strukturen des Dekors so stark gebrochen, gebeugt oder gestreut wird, dass die Qualität der Anzeige, messbar z.B. durch die Auflösung, Homogenität, Luminanz, Farbpräzision oder Kontrast, maßgeblich verschlechtert wird.

Gleichzeitig kann mit dem erfindungsgemäßen Schichtaufbau durch seitliche Lichteinkopplung in der Schicht a. ein 3D-Dekor beleuchtet und damit für das Auge von vorne sichtbar gemacht werden. Durch Ausschalten der seitlichen Lichtquelle, wie LED-Kantenmodule, wird das 3D-Dekor wieder für das Auge unsichtbar gemacht.

Bevorzugte technische Lösungen für dekorative Licht-optische Effekte in denen der erfindungsgemäße Schichtaufbau als 3D-Dekor eingesetzt wird und die in jeder Kombination möglich sind, sind:
(D1) Die 3D-Struktur wird als 3D-Dekor für das Auge bei aktiver Beleuchtung mittels Lichtquelle ii. sichtbar, weil sie einen Anteil des auftreffenden Lichts von ihrer Oberfläche nach außen zurückstreut.
(D2) Die 3D-Struktur wird als 3D-Dekor für das Auge bei aktiver Beleuchtung mittels Lichtquelle ii. sichtbar, weil sie in Teilbereichen oder als ganze Fläche Licht nach außen zurückspiegelt oder -streut.
(D3) Die vordere Schicht a. dient als flächiger Lichtleiter für Licht, insbesondere Licht von Leuchtdioden (LED), das über eine oder mehrere Kanten oder mittels einer Einkoppeloptik über eine Oberfläche in den Lichtleiter eingekoppelt wird und in diesem durch totale interne Reflexion propagiert. Die 3D-Strukturen unterbrechen die lineare Ausbreitung des Lichts durch in den Lichtleiter hineinragende oder erweiternde schräge Flächen, die den Winkel der Lichtausbreitung lokal verändert und damit die totale interne Reflexion unterbrechen kann. Lichtanteile, die nicht mehr der totalen interne Reflexion unterliegen, treten nach außen und werden als dynamisches Dekorlicht wahrgenommen. Die Propagationsverluste durch die 3D-Struktur sind dennoch so gering, dass die Flächenlichtleitung gewährleistet ist und das 3D-Dekor die Funktion eines flächigen Dekorlichts übernimmt. Bei aktiver Beleuchtung nur aus einer Richtung (z.B. über eine Kante) ist der Kontrast der 3D-Struktur besonders hoch wegen der Schattenbildung, die durch flache Beleuchtung in Verbindung mit tiefen und dem Licht abgewandten Strukturen entsteht.
(D4) Dies 3D- Struktur liegt zu 10 bis 100 %, bevorzugt zu 20 bis 90 %, mehr bevorzugt zu 30 bis 80 % über einem Anzeige-Element, bezogen auf die Außenfläche des Anzeige-Elements.
(D5) Die 3D- Struktur liegt mindestens partiell, bevorzugt zu 20 bis 90 %, mehr bevorzugt zu 30 bis 80 % über einem Anzeige-Element, bezogen auf die Außenfläche des Anzeige-Elements und erstreckt sich über dieses hinaus.
(D6) Fade-out: Die 3D- Struktur hat einen Fade-out Effekt, bevorzugt im Bereich des Anzeige-Elements, der z.B. durch Abnahme in der Dekortiefe oder seiner Flächenanteile realisiert werden kann. Mit Fade-out Effekt ist gemeint, dass die 3D- Struktur im Anzeigebereich des Anzeige-Elements optisch fließend und nicht scharf in eine plane Fläche übergeht, wobei die Elemente der 3D-Struktur in ihrer Anzahl und/oder relativen Flächenbelegung und/oder Strukturtiefe kontinuierlich abnehmen, beginnend im Bereich außerhalb des Anzeige-Elements und endend im Anzeigebereich des Anzeige-Elements.
(D7) Black Panel: Die 3D- Struktur wird für das Auge bei ausgeschalteter Lichtquelle ii. und ausgeschaltetem Display nicht mehr erkennbar, wobei das Kontrastverhältnis im Bereich der 3D- Struktur bei guten ambienten Lichtbedingungen (60 bis 120 cd/m² Leuchtdichte, homogene Ausleuchtung, ohne Blendung) kleiner als 2,5 : 1 ist. Man erhält einen Black-Panel-Effekt, falls für Schicht c. eine stark absorbierende Black Panel Folie gewählt wird, die durch eine Lichttransmission von 10 bis 50%, bevorzugt von 15 bis 35%, mehr bevorzugt von 20 bis 25% gekennzeichnet ist.
(D8) White Panel oder Grey Panel: Ein White Panel Effekt bzw. Grey Panel Effekt, wenn für Schicht c. eine Streufolie gewählt wird mit einer Lichttransmission von 70 bis 92%, bevorzugt von 73 bis 85% und einem Halbwertswinkel für das gestreute Licht von 15 bis 50°, bevorzugt von 25 bis 50°.
(D9) Lichtmischung: Überlappen Dekorlicht und Licht des Displays bzw. Lichtquelle iv., so findet eine Lichtmischung statt, mit additiver Farbmischung und mit Intensitätsanstieg im Überlappbereich..

Das Kontrastverhältnis ist definiert durch Lmax / Lmin, mit Lmax = maximale Leuchtdichte in der 3D-Struktur und Lmin = minimale Leuchtdichte in den dunkelsten Bereichen der 3D-Struktur.

Der erfindungsgemäße Schichtaufbau ermöglicht in Kombination mit Leucht- und Anzeigeelementen insgesamt mindestens vier individuelle Betriebszustände:
1. Kantenbeleuchtung an, so dass die 3D- Struktur sichtbar wird und Display an, so dass auch die Anzeige sichtbar wird, auch im Dekorbereich;
2. Kantenbeleuchtung aus, so dass die 3D- Struktur unsichtbar bleibt und Display aus, so dass die Anzeige nicht sichtbar ist, auch nicht im Dekorbereich;
3. Kantenbeleuchtung an, so dass die 3D- Struktur sichtbar wird und Display aus, so dass die Anzeige nicht sichtbar ist, auch nicht im Dekorbereich;
4. Kantenbeleuchtung aus, so dass die 3D- Struktur unsichtbar bleibt und Display an, so dass die Anzeige sichtbar ist, auch im Dekorbereich.

Der erfindungsgemäße Schichtaufbau wird bevorzugt mit Elementen ausgewählt aus der Gruppe bestehend aus einer oder mehreren Display-Anzeigen, mit einer oder mehreren Kantenbeleuchtungen und mit einem oder mehreren Durchlicht-Einheiten oder einer Kombination aus mindestens zwei hiervon.

Der erfindungsgemäße Schichtaufbau wird bevorzugt als Display-Abdeckung verwendet.

Der erfindungsgemäße Schichtaufbau wird bevorzugt als Sensorabdeckung verwendet. Bevorzugte Sensoren sind ausgewählt aus der Gruppe bestehend aus Innenraumkameras, Innenraum-LiDARe, RADARe, Infrarot-Kameras, High Dynamic Range Kameras oder einer Kombination aus mindestens zwei hiervon.

Der erfindungsgemäße Schichtaufbau wird bevorzugt als Antennenabdeckung verwendet. Antennen sind beispielsweise 5G-Antennen.

Bevorzugt weist der erfindungsgemäße Schichtaufbau mindestens eine, bevorzugt zwei, mehr bevorzugt drei, noch mehr bevorzugt vier, besonders bevorzugt alle der folgenden Schichten oder Beschichtungen auf, ausgewählt aus:
- Der Schichtaufbau weist zusätzlich eine vorderseitige Schutzschicht auf, z.B. einen kratzbeständigen Lack oder einen Schutzlack gegen chemisch aggressive Medien;
- Der Schichtaufbau weist zusätzlich eine rückseitige Schicht auf, z.B. ausgeführt als transparente Elektrode oder als transparente leitfähig beschichtete Folie, um dem Verbund eine Touch Funktion hinzuzufügen;
- Der Schichtaufbau weist auf der Sichtseite eine zusätzliche Anti-Reflex und/oder Anti-Fingerprint Schicht auf;
- Der Schichtaufbau weist auf der Sichtseite eine zusätzliche Niedrig-Reflex-Schicht auf;
- Der Schichtaufbau weist auf der Sichtseite eine zusätzliche Anti-Fingerprint-Schicht auf.

In einer bevorzugten Ausführungsform der Beleuchtungsanlage bildet die Beleuchtungsanlage einen Teil der Karosserie eines Fahrzeugs, welcher zur Kommunikation mit Personen dient. Bevorzugt ist der Teil der Karosserie ausgewählt aus der Gruppe bestehend aus einem Kühlergrill, einer Stoßstange, einem Frontgrill, Dachmodul, Sensorbox, Stoßfänger, Funktionsleuchte, Heckleuchte, Scheinwerfer und allen anderen Leuchten für Fahrzeug-Außenanwendungen, oder einer Kombination aus mindestens zwei davon.

In einer bevorzugten Ausführungsform der Beleuchtungsanlage deckt die Beleuchtungsanlage einen Teil der Fahrzeug-Innenraum-Oberfläche ab, um ein HMI oder eine ambiente Beleuchtung abzubilden.

In einer bevorzugten Ausführungsform der Beleuchtungsanlage handelt es sich bei der Lichtquelle ii. um eine LED-Kantenbeleuchtung.

In einer bevorzugten Ausführungsform der Beleuchtungsanlage ist der Sensor v. ausgewählt aus der Gruppe bestehend aus Innenraumkameras, Innenraum-LiDARe, RADARe, Infrarot-Kameras, High Dynamic Range Kameras oder einer Kombination aus mindestens zwei hiervon.

Die Erfindung wird in den Figuren
- Figur 1:: Schematischer Aufbau für eine Display-Abdeckung nach dem Stand der Technik
- Figur 2:: Beispiel für einen erfindungsgemäßen Schichtaufbau
- Figur 3:: Beispiel für einen erfindungsgemäßen Schichtaufbau
- Figur 4:: Beispiel für einen erfindungsgemäßen Beleuchtungsanlage mit einem erfindungsgemäßen Schichtaufbau
- Figur 5:: Beispiel für unterschiedliche Zustände der erfindungsgemäßen Beleuchtungsanlage aus Figur 4
näher beschrieben, wobei die Figuren nicht maßstabsgetreu sein müssen. Die Figuren sollen nicht als einschränkend hinsichtlich der erfinderischen Breite verstanden werden.

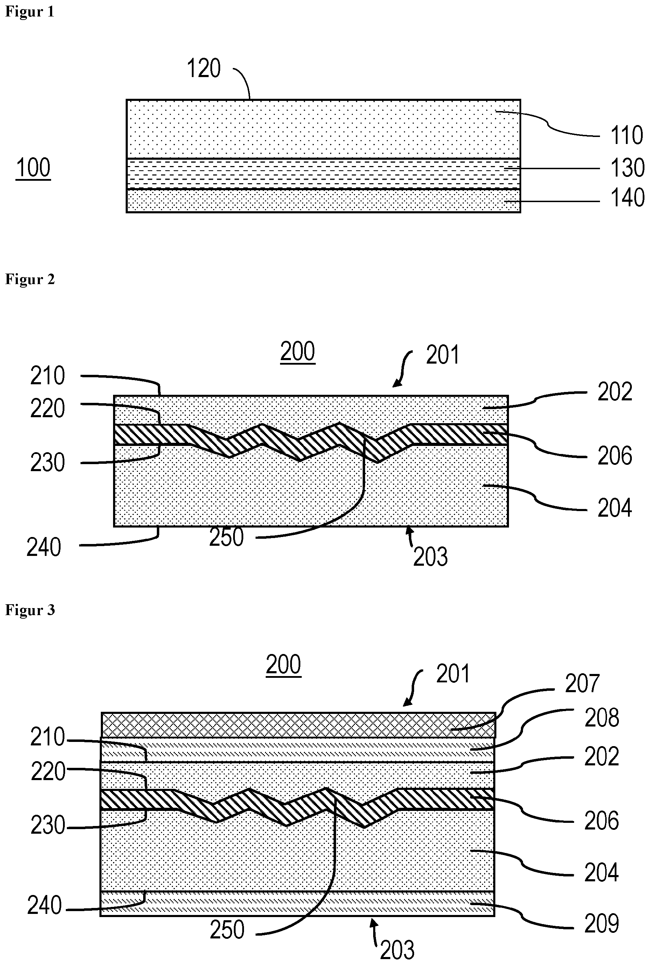

Figur 1 zeigt einen Schichtenaufbau in Form einer Display-Abdeckung 100 nach dem Stand der Technik. Die Display-Abdeckung 100 besteht aus einem transparenten oder transluzenten Glaskörper 110, dessen Oberfläche 120 mit polymeren Funktionsschichten z.B. für Splitterschutz oder optische Entspiegelung ausgerüstet sein kann. Darunter liegen eine Polymerschicht 130 und eine transparente leitfähige Schicht 140, die für eine Touch-Funktion als Elektrode dient. Die Oberfläche 120 und die innenliegenden Grenzflächen sind glatt.

Figur 2 zeigt einen schematischen Aufbau eines erfindungsgemäßen Schichtenaufbaus 200. Hierbei ist eine zickzack-förmige Schicht c. 206, in Form einer Polycarbonatschicht zwischen zwei Polycarbonatschichten angeordnet, die die Schichten a. 202 und Schicht b. 204 darstellen. Die Schicht a. 202 weist in Richtung der Vorderseite oder Sichtseite 201 des Schichtaufbaus 200 und ist damit zu einem potentiellen Betrachter ausgerichtet. Die Schicht b. 204 weist in Richtung Innenseite 203 einer Beleuchtungsanlage in die der Schichtaufbau 200 eingebaut sein kann. Die Schicht a. 202 bildet eine äußere Oberfläche A 210 und eine zu der Oberfläche A 210 angewinkelte Oberfläche A' 220. Die Schicht b. 204 bildet eine äußere Oberfläche B 240 und eine zu der Oberfläche B 240 angewinkelte Oberfläche B' 230. Die Oberflächen A 210 und B 240 sind parallel zueinander angeordnet. Zwischen der Schicht a. 202 und Schicht b. 204 ist in angewinkelter Form die Schicht c. 206 angeordnet. Die Schicht c. 206 folgt dabei der Kontur die durch die Oberflächen A' 220 und B' 230 gebildet werden und bildet eine 3D-Struktur 250 in dem Schichtaufbau 200.

Figur 3 zeigt einen schematischen Aufbau eines erfindungsgemäßen Schichtenaufbaus 200 wie er in Figur 2 dargestellt ist mit dem Zusatz, dass auf der Schicht a. 202 als auch auf der Schicht b. 204 jeweils eine weitere Schicht 208 oder 209 angebracht ist. Bei der Schicht 208 handelt es sich um eine Schutzschicht, die den Schichtaufbau 200 gegen Verkratzen oder gegen Chemikalieneinfluss schützt. Bei der Schicht 209 handelt es sich entweder um eine Schutzschicht, die den Schichtaufbau 200 gegen Verkratzen oder gegen Chemikalieneinfluss schützt oder um eine transparente Elektrode für Touch Funktion. Weiterhin kann auf mindestens einer Seite des Schichtaufbaus 200 alternativ oder zusätzlich zu den Schichten 208 oder 209 eine Schicht 207 angebracht sein. Bei der Schicht 207 handelt es sich um eine oder mehrere ausgewählt aus der Gruppe bestehend aus einer Antireflexschicht, einer Low-Reflex und einer Anti-Fingerprint oder eine Kombination aus mindestens zwei hieraus. In der Figur 3 ist nur die Variante gezeigt, dass auf der Vorderseite, also der Seite an der sich die Schicht a. befindet, die zusätzliche Schicht 207 angeordnet ist. Es ist jedoch möglich jegliche Kombinationen der Schicht 207, 208 und 209 vorzunehmen.

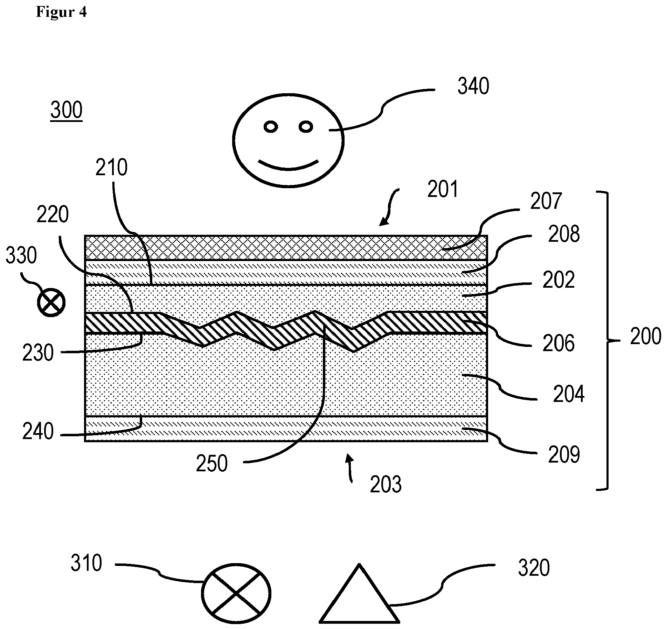

Figur 4 zeigt eine Beleuchtungsanlage 300, die einen erfindungsgemäßen Schichtaufbau 200 aufweist, wie er in Figur 3 beschrieben wurde. Die Beleuchtungsanlage 300 weist neben dem erfindungsgemäßen Schichtaufbau 200 mindestens eine Lichtquelle 310 und/oder einen Sensor 320 auf sowie mindestens eine LED-Kantenbeleuchtung 330, die Licht in die Schicht 202 einkoppelt.

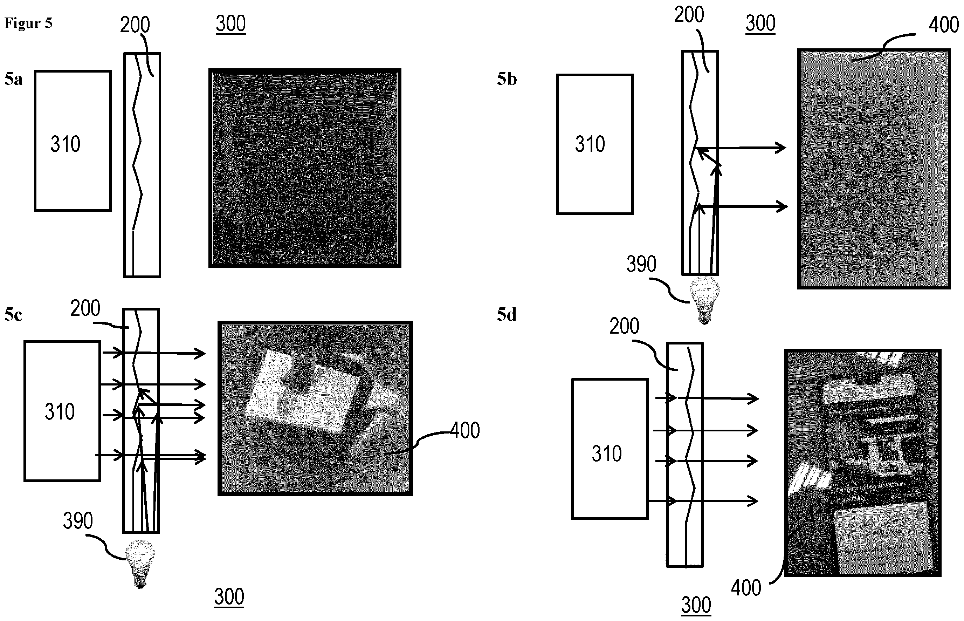

Figur 5 zeigt vier Beispiele 5a, 5b, 5c, und 5d für unterschiedliche Zustände der erfindungsgemäßen Beleuchtungsanlage 300 aus Figur 4, dargestellt an ein und derselben Schichtstruktur 200. Jeweils sind links das Display 310 und die erfindungsgemäße Schichtstruktur 200 schematisch im Querschnitt gezeigt und rechts eine Fotografie 400 der Vorderseite oder Sichtseite 201 abgebildet. Im Zustand 5a ist als Lichtquelle ein ausgeschaltetes Display 310 (schematisch als Rechteck abgebildet) und die ausgeschaltete Kanten-LED 390 gezeigt. Das Foto 400 zeigt eine dunkle Fläche, d.h. den Black Panel Effekt. Im Zustand 5b ist das Display 310 ausgeschaltet und die Kanten-LED 390 (schematisch als Glühbirne abgebildet) eingeschaltet. Das Foto 401 zeigt eine 3D-Dekorfläche, in der die 3D-Struktur 250 für das Auge des Betrachters sichtbar gemacht wurde. Im Zustand 5c ist das Display 310 eingeschaltet und die Kanten-LED 390 eingeschaltet. Das Foto 402 zeigt eine 3D-Dekorfläche, mit sichtbar gemachter 3D-Struktur 250, die vom Licht des Display 310 durchleuchtet wird und daher an den vom Display 310 durchleuchteten Stellen im Bildbereich überstrahlt wird. Das Bild des Displays 310 erscheint verzerrungsfrei. Im Zustand 5d ist das Display 310 eingeschaltet und die Kanten-LED 390 ausgeschaltet. Das Foto 403 zeigt eine dunkle Fläche (Black Panel Effekt), die nur im Bildbereich des Displays 310 überstrahlt wird. Das Bild des Displays 310 erscheint verzerrungsfrei, ohne dass die 3D-Struktur 380 zu erkennen ist.

### Beispiele

Die Erfindung wird anhand der nachfolgenden Beispiele näher erläutert, ohne jedoch darauf beschränkt zu sein.

### Beispiel 1: Schaltbarer Black Panel Effekt

### Eingesetzte Materialien

Für die Schicht a. und die Schicht b. wurde verwendet: Transparentes Makrolon^{®} Ai der Covestro Deutschland AG: aromatisches Polycarbonat auf Basis von Bisphenol A mit einer MVR von 19 cm³/(10 min), bestimmt bei 300 °C und 1,2 kg gemäß DIN ISO 1133:2012-03, enthaltend UV-Absorber und Entformer. Ty, gemessen bei einer Dicke von 2 mm gemäß ISO 13468-2:2006 (D65, 10°): 88,07 %. Trübung, bestimmt nach ASTM D1003:2013 bei einer Schichtdicke von 2 mm: 0,68 %. Das Polycarbonat lag als Granulat für den Spritzguss vor. Zur Vorbehandlung wurde das Polycarbonat für 4 Stunden bei 120 °C in Trockenluft getrocknet. Das Polycarbonat hat einen Brechungsindex von 1,585 nach ISO 489 (Verfahren A).

Für die Zwischenschicht c. wurde verwendet: Makrofol^{®} LM 296 1-2 760125 der Covestro Deutschland AG: grau eingefärbte Extrusionsfolie auf Basis des Polycarbonats Makrolon^{®}. Die Extrusionsfolie hat einen Brechungsindex von 1,596 nach ISO 489 (Verfahren A). Die Folien wurden jeweils auf die Maße 200 mm x 150 mm bei einer Dicke von 0,5 mm zugeschnitten. Sie besaßen eine glänzende Oberfläche auf der 1er Seite und eine sehr fein mattierte Oberfläche auf ihrer 2er Seite.

Zur Herstellung der 3D-Struktur wurde ein metallischer Platten-Werkzeugeinsatz bereitgestellt mit einer 3D-Struktur, wie in Abbildung B1.1 zu sehen. Abbildung B1.2 weist typische Strukturgrößen der Einzelelemente von 7 bis 16 mm und eine Höhe der 3D-Strukturelemente von 0,49 mm auf. Daraus resultieren Winkel zwischen der Strukturflächennormale und der planen und glatten zweiten Wand der Spritzgussform von 3,35°. Damit ist diese Struktur geeignet, um erfindungsgemäße Schichtstrukturen herzustellen und einen experimentellen Nachweis der gewünschten Effekte bei erfindungsgemäßen Schichtstrukturen zu ermöglichen.

**Abbildung B1.1:** 3D-Modell einer Struktur mit pyramidalen Elementen unterschiedlicher Verteilung auf einer Platte mit dem Flächenmaßen 200 mm x 150 mm.

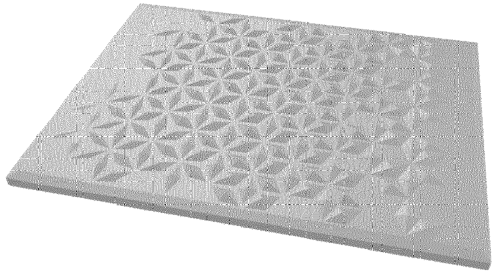

**Abbildung B1.2:** Maße der pyramidalen Elemente [mm]. Oben: Seitenansicht. Unten: Draufsicht.

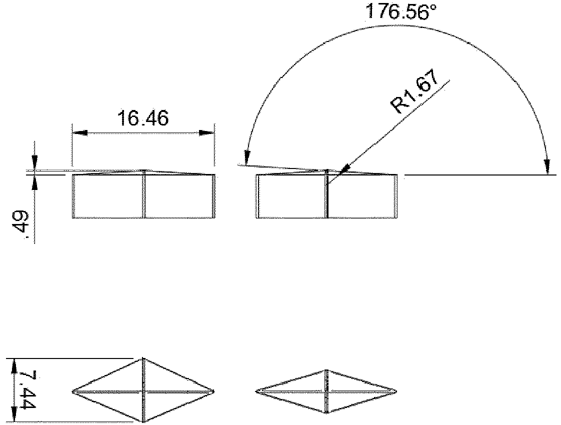

Für die Versuche wurden Spritzguss-Musterplatten mit rückseitiger 3D-Struktur und den Maßen 200 mm x 150 mm x 3 mm aus Polycarbonat-Zusammensetzungen hergestellt.

Die Lichttransmission der Makrofol^{®} Folie betrug vor der Verarbeitung 25% nach DIN ISO 13468-2:2006 (D65, 10°). Damit ist sie als Black Panel Folie zu verwenden.

### Herstellung der Formkörper in Form von Schichtaufbauten

Auf einer HM270 Spritzgießmaschine der Wittmann Battenfeld GmbH wurde ein mehrschichtiges Formteil mit den Maßen 200 mm x 150 mm x 6 mm hergestellt.

Dazu wurde in einem ersten Schritt jeweils eine Makrofol^{®} Folie als Schicht c., aus dem zuvor erwähnten Material, in diejenige Werkzeughälfte eines Stahlwerkzeugs mit den Forminnenmaßen 200 mm x 150 mm x 3 mm eingelegt, deren Oberfläche mit der oben beschriebenen und in Abbildung B1.1 gezeigten 3D-Struktur versehen war. Die andere Werkzeughälfte besaß eine hochglänzende Oberfläche. Nach dem Schließen des Werkzeugs wurde das bei 305 °C aufgeschmolzene transparente Polycarbonat-Material mit einem maximalen spezifischen Einspritzdruck von ca. 2000 bar in das Werkzeug eingespritzt, um die Schicht a. zu bilden. Die Folie der Schicht c. wurde bei diesem Überspritzen jeweils in die Struktur der Werkzeugoberfläche gedrückt. Welche Oberflächenseite, also die glatte 1er-Seite oder die raue 2er-Seite zur Struktur eingelegt wurde, war dabei unerheblich. Die Temperatur der Werkzeugwand lag auf beiden Seiten, also sowohl auf der Auswerferseite sowie auch auf der gegenüberliegenden Einspritzseite bei 90 °C. Die Einspritzzeit betrug etwa 2,5 Sekunden. Nach einer Nachdruckzeit von 15 Sekunden (spezifischer Nachdruck: 850 bar) und einer Kühlzeit von 20 Sekunden wurde das Werkzeug geöffnet und das Formteil entnommen. Die Makrolon-Schicht bildet die Schicht a.; die Makrofol-Folie die Schicht c, im Folgenden als Polycarbonatplatte bezeichnet.

Anschließend wurde das Spritzgießwerkzeug auf die Forminnenmaße 200 mm x 150 mm x 6 mm umgebaut und die strukturierte Stahloberfläche entfernt, sodass jetzt beide Werkzeughälften eine hochglänzende Oberfläche besaßen. Die Polycarbonatplatte wurde mit der 3D strukturierten Seite bei 90 °C für 15 Minuten in einem Wärmeschrank vortemperiert. Daraufhin wurde diese Platte wieder in die erste Werkzeughälfte des Stahlwerkzeugs mit den Forminnenmaßen 200 x 150 x 6 mm eingelegt, die strukturierte Oberfläche mit der jeweiligen Folie zur zweiten Werkzeughälfte zeigend. Nach dem Schließen des Werkzeugs wurde das bei 305 °C aufgeschmolzene transparente Polycarbonat-Material mit einem maximalen spezifischen Einspritzdruck von ca. 2000 bar in das Werkzeug auf die Polycarbonatplatte, auf die Seite mit der 3D strukturierten Folie eingespritzt. Die Temperatur der Werkzeugwand lag auf der Auswerferseite bei 100 °C, auf der gegenüberliegenden Einspritzseite bei 80 °C. Die Einspritzzeit betrug erneut 2,5 Sekunden. Nach einer Nachdruckzeit von 15 Sekunden (spezifischer Nachdruck: 800 bar) und einer Kühlzeit von 30 Sekunden wurde das Werkzeug geöffnet und das fertige Formteil mit einer Gesamtdicke von etwa 6 mm und zwei hochglänzenden Seiten entnommen. Der erhaltene Schichtaufbau hat nun eine weitere Schicht b., und weist den erfindungsgemäßen dreilagigen Schichtenaufbau auf mit innenliegender 3D Struktur in Form der strukturierten "Black-Panel-Folie".

Die Lichttransmission des erhaltenen Schichtaufbaus lag bei 21%nach DIN ISO 13468-2:2006 (D65, 10°).

### Nachweis der verschiedenen optischen Effekte

Bei normalem Raumlicht (Deckenlicht) und Blick auf die Schicht a. erscheint die Schicht sowie der gesamte Schichtaufbau gleichmäßig in dunklem anthrazit, ohne dass ein Dekor zu erkennen ist. Für die Sichtbarmachung des Dekors wurde der Formkörper in eine Lichtbox eingespannt, welche für die Aufnahme von Platten mit den Maßen 200 mm x 150 mm gefertigt wurde. Diese Lichtbox besaß einen rund um die Platte auf Höhe der Kanten laufenden LED-Streifen für die Kantenbeleuchtung sowie etwas Platz auf der Rückseite, um ein Display-Modul, z.B. Smart Phone oder eine LED Matrixleuchte unterzubringen, wie dies schematisch in Figur 5 gezeigt ist. Kantenbeleuchtung und Hinterleuchtung (Display) können dabei sowohl separat als auch kombiniert betrieben werden. Wird die Beleuchtung der Kante eingeschaltet, wird die zuvor in der dunklen Fläche unsichtbare 3D-Struktur als Dekorlicht mit dem Auge sichtbar. Wird die Hinterleuchtung bzw. das Display eingeschaltet, wird das Licht verzerrungsfrei nach vorne transmittiert und das Display-Bild wird verzerrungsfrei klar wiedergegeben und für den Betrachter sichtbar.

Die optischen Effekte werden durch die Bilder aus Figur 5 veranschaulicht.

### Beispiel 2: Schaltbarer Black Panel Effekt, höhere Transmission

Schicht a. und b. enthielten Makrolon^{®} wie in Beispiel 1, jedoch wurde für die Zwischenschicht c. Makrofol^{®} LM 296 1-2 der Covestro Deutschland AG verwendet: grau eingefärbte Extrusionsfolie auf Basis des Polycarbonats Makrolon^{®} und einer Lichttransmission gemäß DIN ISO 13468-2:2006 (D65, 10°) von 50%. Die Extrusionsfolie hat einen Brechungsindex von 1,59 nach ISO 489 (Verfahren A).

Alle optischen Effekte, wie oben zu Beispiel 1 beschreiben, ließen sich auch mit diesem erfindungsgemäßen Schichtaufbau darstellen. Im Vergleich zu Beispiel 1 ist das Display-Bild heller, aber die 3D-Struktur subjektiv etwas kontrastärmer sichtbar. Daraus lässt sich schlussfolgern: Je größer die Absorption der Schicht c. ist (also desto mehr Farbstoffe in der Folie sind), desto besser zeichnet sich die 3D-Struktur bei der Kantenbeleuchtung ab.

### Beispiel 3: Schaltbarer Black Panel Effekt, erfindungsgemäß

Schicht a. und b. enthielten Makrolon^{®} wie in Beispiel 2, jedoch wurde für die Zwischenschicht c. verwendet: Makrofol^{®} LM 296 1-2 der Covestro Deutschland AG: grau eingefärbte Extrusionsfolie auf Basis des Polycarbonats Makrolon^{®} und einer Transmission gemäß DIN ISO 13468-2:2006 (D65, 10°) von 75%. Die Extrusionsfolie hat einen Brechungsindex von 1,59 nach ISO 489 (Verfahren A).

Die optischen Effekte ließen sich mit diesem Schichtaufbau zu einem wesentlichen Teil erreichen. Im Vergleich zu Beispiel 2 ist das Display-Bild nochmals heller, das 3D-Dekor subjektiv nochmals kontrastärmer und die 3D-Struktur zeichnet sich im Ambientelicht (z.B. Büroraum mit indirektem Deckenlicht) leicht ab. Dennoch konnte das Display klar durch die 3D-Struktur gelesen werden egal, ob das Kantenlicht eingeschaltet war oder nicht. Die 3D-Struktur war bei eingeschalteten Kantenlicht gut sichtbar.

### Beispiel 4: Schaltbarer White Panel Effekt

Schicht a. und b. enthielten Makrolon^{®} wie in Beispiel 1, jedoch wurde für die Zwischenschicht c. verwendet: Makrofol^{®}LM 309 der Covestro Deutschland AG: 300 µm dicke Diffusorfolie auf Basis des Polycarbonats Makrolon^{®}, einer Transmission gemäß DIN ISO 13468-2:2006 (D65, 10°) von 86% und einem Halbwertswinkel von 20° gemäß DIN 5036:1978 bezogen auf die Lichtintensität.

Die visuelle Bewertung erfolgte wie in den vorangegangenen Beispielen. Alle optischen Effekte ließen sich auch mit diesem Schichtaufbau darstellen. Anstelle des Black Panel Effekts trat hier ein sogenannter White Panel Effekt auf: Die Diffusorfolie als Schicht c. streute ambientes Licht zurück zum Beobachter. Dieses strukturlose Licht in Verbindung mit breiten Streuwinkeln löste die 3D-Struktur optisch auf und erzeugte beim Beobachter den Eindruck einer gleichmäßig weißlich hellen Fläche. Weil die Ebene des Display-Panels nur ca. 4 mm hinter der Diffusorebene lag, erschien das Display-Bild noch immer scharf. Der Diffusor-Effekt verbesserte sogar die Bildhelligkeit bei Beobachtung von schräger Position. Durch die White Panel Folie lässt sich also das 3D-Dekor bei ausgeschalteter Kantenbeleuchtung in ambienter Lichtumgebung unsichtbar gestalten und durch Kantenbeleuchtung sichtbar machen. Gleiches gilt für Hinterleuchtung (Display): Ausgeschaltet sind sie unsichtbar und eingeschaltet sichtbar.

### Messwertetabelle:

| | Δn b. und c. | Δn a. und b. | T c. | Haze gesamt | HWW c. |
|---|---|---|---|---|---|
| Beispiel 1 | < 0,005 | < 0,005 | 20% | < 4% | (nicht streuend) |
| Beispiel 2 | < 0,005 | < 0,005 | 50% | < 4% | (nicht streuend) |
| Beispiel 3 | < 0,005 | < 0,005 | 75% | < 4% | (nicht streuend) |
| Beispiel 4 | < 0,005 | < 0,005 | 86% | 12-14% | 20° |

| | | | | | |
|---|---|---|---|---|---|
| Legende: Δn = Brechungsindexunterschied zwischen zwei Schichten; T = Transmission im Sichtbaren; Haze = Opazität; HWW = Halbwertswinkel bzw. Streubreite ("nicht streuend" bedeutet, dass ein HWW nicht bestimmbar ist, da kein oder kaum Streulicht vorhanden) | | | | | |

## Patentansprüche

1. Ein Schichtaufbau, beinhaltend:
(A1) eine erste Schicht a. mit einer ersten planen Oberfläche A und einer der ersten Oberfläche A gegenüberliegenden, zumindest über einen Teilbereich gegenüber der ersten Oberfläche A angewinkelt angeordneten Oberfläche A', wobei die Schicht a. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon ;
(A2) eine weitere Schicht b. mit einer ersten planen Oberfläche B und einer der ersten Oberfläche B gegenüberliegenden, zumindest über einen Teilbereich gegenüber der ersten Oberfläche B angewinkelt angeordneten Oberfläche B', wobei die Schicht b. ein transparentes Material aufweist, vorzugsweise Glas oder ein thermoplastisches Polymer, bevorzugt ausgewählt aus der Gruppe bestehend aus einem Polycarbonat, einem Copolycarbonat, Polyestercarbonat, PMMA, PET, einem Polyurethan, einem thermoplastischen Polyurethan oder einer Mischung aus mindestens zwei hiervon;
wobei die Schichten a. und b. so zu einander angeordnet sind, dass die planen Oberflächen A und B parallel zueinander verlaufen und die angewinkelt angeordneten Oberflächen A' und B' einander zugewandt sind und einen einander entsprechenden Verlauf der Winkelung unter Ausbildung einer 3-D Struktur aufweisen, und
wobei eine Zwischenschicht c. zwischen der angewinkelten Oberfläche A' der ersten Schicht a. und der angewinkelten Oberfläche B' der weiteren Schicht b. so angeordnet ist, dass sie in ihrer Längsausdehnung dem angewinkelten Verlauf folgt und die 3-D Struktur abbildet, und
wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden, gemäß ISO 489 (Verfahren A) ermittelt.

2. Der Schichtaufbau gemäß Anspruch 1, wobei der Schichtaufbau mindestens eine der folgenden Merkmale aufweist, wobei Merkmale (E4) und (E5) alternativ sind:
(E1) die Oberfläche A der Vorderseite, also der Außenfläche der Schicht a. und die Oberfläche B der Rückseite, also der Außenseite von Schicht b. sind glatt;
(E2) die Schicht a. ist transparent;
(E3) die Schicht a. ist als ein flächiger Lichtleiter ausgebildet;
(E4) mindestens eine der Schichten b. oder c. weist einen Absorptionsbereich im sichtbaren Spektrum auf;
(E5) die Schicht c. ist als Licht streuende Schicht ausgebildet, insbesondere durch eine Lichttransmission von 70 bis 92%, bevorzugt von 73 bis 85% und einen Halbwertswinkel für das gestreute Licht von 15 bis 50°, bevorzugt von 25 bis 50°.

3. Der Schichtaufbau gemäß einem der vorhergehenden Ansprüche, wobei der Schichtaufbau das folgende Merkmal aufweist:
(E5) die Schicht c. ist als Licht streuende Schicht ausgebildet, insbesondere durch eine Lichttransmission von 70 bis 92%, bevorzugt von 73 bis 85% und einen Halbwertswinkel für das gestreute Licht von 15 bis 50°, bevorzugt von 25 bis 50°.

4. Der Schichtaufbau gemäß einem der vorhergehenden Ansprüche, wobei die weitere Schicht c. blasenfrei mit den Schichten a. und b. verbunden ist.

5. Der Schichtaufbau gemäß einem der vorhergehenden Ansprüche, wobei die weitere Schicht c. ein transparentes, thermoplastisches Polymer beinhaltet, bevorzugt ausgewählt aus der Gruppe bestehend aus einem Polycarbonat, einem Copolycarbonat, einem Polymethylmethacrylat (PMMA), einem Polyethylenterephthalat (PET), einem Blend beinhaltend mindestens eines der vorstehenden Polymere oder einer Mischung aus mindestens zwei hiervon.

6. Der Schichtaufbau gemäß einem der vorhergehenden Ansprüche, wobei die Schicht a. mindestens eine der folgenden Eigenschaften aufweist:
a1. eine Dicke in einem Bereich von 100 µm bis 7 mm;
a2. eine Fläche in einem Bereich von 1 cm² bis 10 m²;
a3. eine Ausdehnung der gewinkelten Struktur quer zur Flächenausdehnung der Schicht a. in einem Bereich von 10 µm bis 1 cm;
a4. eine Rautiefe Rz auf der Oberfläche A nach DIN EN ISO 4287 (10/98) von maximal 50 µm;
a5. eine Transparenz in einem Bereich von ≥ 70 %;
a6. frei von Lichtstreuung im sichtbaren Spektralbereich ist.

7. Der Schichtaufbau gemäß einem der vorhergehenden Ansprüche, wobei die Schicht b. mindestens eine der folgenden Eigenschaften aufweist:
b1. eine Dicke in einem Bereich von 100 µm bis 7 mm;
b2. eine Fläche in einem Bereich von 1 cm² bis 10 m²;
b3. eine Rautiefe Rz auf der Oberfläche A nach DIN EN ISO 4287 (10/98) von maximal 50 µm;
b4. eine Transparenz in einem Bereich von 10 bis 100 %, bestimmt nach DIN EN ISO 13468-2-2006-7;
b5. frei von Lichtstreuung im sichtbaren Spektralbereich;
b6. Streupartikel in einer Menge in einem Bereich von 0,1 bis 20 Gew.-%, bezogen auf das Gesamtgewicht der Schicht b..

8. Der Schichtaufbau gemäß einem der vorhergehenden Ansprüche, wobei der Schichtaufbau mindestens eine der folgenden Eigenschaften aufweist:
(A1) Alle Schichten, insbesondere Schichten a., b. und c., sind in Summe nur schwach Licht streuend im sichtbaren Spektralbereich, bevorzugt durch einen Haze-Wert (Opazität, Trübung) nach ASTMD 1003 von kleiner als 20%, bevorzugt kleiner als 15%, weiter bevorzugt kleiner als 10%;
(A2) Die Gesamttransmission Ty des Schichtaufbaus beträgt im sichtbaren Spektrum mindestens 10%, %, bevorzugt in einem Bereich von 10 bis 90%, besonders bevorzugt in einem Bereich von 15 bis 80%, bestimmt nach DIN ISO 13468-2:2006 (D65, 10°);
(A3) einen Halbwertswinkel des gestreuten Lichts von 0 bis 15°, bevorzugt von 1 bis 10°, besonders bevorzugt von 2 bis 8°;
(A4) schwach Licht streuend im nahen Infrarot, **gekennzeichnet durch** eine Trübung, bestimmt durch Nah-Infrarot-Spektroskopie in Anlehnung an ASTM D1003, von kleiner als 5%, bevorzugt kleiner als 2%, mehr bevorzugt kleiner als 1%.

9. Der Schichtaufbau gemäß einem der vorhergehenden Ansprüche, wobei die Schicht c. mindestens eine der folgenden Eigenschaften aufweist:
c1. eine Dicke in einem Bereich von 10 µm bis 1000 µm;
c2. eine Fläche in einem Bereich von 1 cm² bis 50 m²;
c3. eine Dickenvarianz über die gesamte Fläche in einem Bereich von 0,1 bis 1µm;
c4. eine Transparenz in einem Bereich von 10 bis 99%, bevorzugt von 25 bis 99 %.

10. Ein Verfahren zur Herstellung eines Schichtaufbaus mit mindestens den Schritten:
I) Gießen eines verflüssigten Polymeren, bevorzugt ausgewählt aus der Gruppe bestehend aus Polycarbonat, Copolycarbonat, Polyestercarbonat, PMMA, PET, einem Polyurethan, einem thermoplastischen Polyurethan oder einer Mischung aus mindestens zwei hiervon in eine Form mit einer gewinkelten Oberfläche, wobei nach Verfestigung des Polymeres eine Schicht a. aus dem Polymer entsteht, die eine erste plane Oberfläche A und eine gewinkelte Oberfläche A' aufweist;
II) Auflegen einer weiteren Schicht c. auf die gewinkelte Oberfläche A', sodass die weitere Schicht c. den Verlauf der Winkelung in ihrer Längsausdehnung annimmt und eine 3D-Struktur ausbildet;
III) Gießen eines Polymeren, bevorzugt ausgewählt aus der Gruppe bestehend aus Polycarbonat, Copolycarbonat, Polyestercarbonat, PMMA, PET, einem Polyurethan, einem thermoplastischen Polyurethan oder einer Mischung aus mindestens zwei hiervon, auf die Schicht c. aus Schritt II) unter Ausbildung einer Schicht b., wobei die gekrümmte Oberfläche A' sich spiegelbildlich in der Schicht b. als gewinkelte Oberfläche B' widerspiegelt;
wobei sich die Brechungsindices der Schichten b. und c. und der Schichten a. und c. jeweils um ≤ 0,1, bevorzugt um ≤ 0,05, mehr bevorzugt um ≤ 0,04, weiter bevorzugt um ≤ 0,03 unterscheiden, gemäß ISO 489 (Verfahren A) ermittelt.

11. Eine Beleuchtungsanlage, bevorzugt ein Display oder ein Sensorsystem, beinhaltend mindestens
i. einen Schichtaufbau nach einem der Ansprüche 1 bis 9, oder hergestellt nach Anspruch 10,
ii. eine Lichtquelle ii., die so neben der Schicht a. angeordnet ist, dass ein seitliches Einstrahlen von Licht in die Stirnseite der Schicht a. möglich ist;
iii. gegebenenfalls ein Display, wobei das Display auf der Seite der Schicht b. des Schichtaufbaus angeordnet ist, wobei die Fläche des Displays bevorzugt parallel zu der Flächenausdehnung des Schichtaufbaus ausgerichtet ist, so dass der erfindungsgemäße Schichtaufbau durchleuchtet wird;
iv. gegebenenfalls eine Lichtquelle iv., wobei die Lichtquelle iv. auf der Seite der Schicht b. des Schichtaufbaus angeordnet ist;
v. gegebenenfalls einen Sensor, wobei der Sensor auf der Seite der Schicht b. des Schichtaufbaus angeordnet ist, wobei die Fläche des Sensors bevorzugt parallel zu der Flächenausdehnung des Schichtaufbaus ausgerichtet ist;
vi. gegebenenfalls einen Projektionsapparat, der in der Ebene der Oberfläche A' oder der Oberfläche B' oder der Oberfläche B, oder geometrisch zwischen A' und B eine Abbildungsebene hat, in der das vom Projektionsapparat projizierte Bild/Video scharf ist bzw. entsprechend eingestellt werden kann.

12. Die Beleuchtungsanlage gemäß Anspruch 11, wobei die Beleuchtungsanlage einen Teil der Karosserie eines Fahrzeugs bildet, welcher zur Kommunikation mit Personen dient.

13. Die Beleuchtungsanlage gemäß Anspruch 11 oder 12, wobei die Beleuchtungsanlage einen Teil der Fahrzeug-Innenraum-Oberfläche abdeckt, um ein HMI oder eine ambiente Beleuchtung abzubilden.

14. Die Beleuchtungsanlage gemäß einem der Ansprüche 11 bis 13, wobei es sich bei der Lichtquelle ii. um eine LED-Kantenbeleuchtung handelt.

15. Die Beleuchtungsanlage gemäß einem der Ansprüche 11 bis 14, wobei der Sensor v. ausgewählt ist aus der Gruppe bestehend aus Innenraumkameras, Innenraum-LiDARe, RADARe, Infrarot-Kameras, High Dynamic Range Kameras oder einer Kombination aus mindestens zwei hiervon.
